# EUROPEAN PATENT SPECIFICATION

(11) **EP 1 283 336 B1**
(45) Date of publication and mention of the grant of the patent: **11.04.2007**
(21) Application number: 02017494.2
(22) Date of filing: 05.08.2002
(51) Int. Cl.: F02B 29/08, F02M 45/02, F02M 61/06, F02M 61/18

(54) **Internal combustion engine**
Brennkraftmaschine
Moteur à combustion interne

(30) Priority: 06.08.2001 JP 2001238203; 15.02.2002 JP 2002038575
(43) Date of publication of application: 12.02.2003
(73) Proprietor: Toyota Jidosha Kabushiki Kaisha, Toyota-shi Aichi-ken, 471-8571 (JP)
(72) Inventor: Watanabe, Yoshimasa, Toyota-shi, Aichi-ken, 471-8571, (JP); Omae, Kazuhiro, Toyota-shi, Aichi-ken, 471-8571, (JP); Futonagane, Yoshinori, Toyota-shi, Aichi-ken, 471-8571, (JP); Tutui, Tuneo, Toyota-shi, Aichi-ken, 471-8571, (JP); Okada, Shin, Toyota-shi, Aichi-ken, 471-8571, (JP)
(74) Representative: TBK-Patent

(56) References cited:
- EP-A- 1 063 416
- WO-A-01/46571
- DE-A- 19 946 906
- US-A- 5 682 854
- PATENT ABSTRACTS OF JAPAN vol. 2000, no. 07, 29 September 2000 (2000-09-29) & JP 2000 120457 A (HINO MOTORS LTD), 25 April 2000 (2000-04-25)
- PATENT ABSTRACTS OF JAPAN vol. 0041, no. 50 (M-037), 22 October 1980 (1980-10-22) & JP 55 101731 A (ISHIKAWAJIMA SHIBAURA KIKAI KK), 4 August 1980 (1980-08-04)

## Description

### BACKGROUND OF THE INVENTION

### 1. Field of the Invention

The invention relates to an internal combustion engine.

### 2. Description of Related Art

In a diesel engine or an in-cylinder type spark ignition engine, fuel needs to be injected into a cylinder in a compression stroke. As such, a fuel injection valve is required to inject the fuel at a very high pressure to enable high-pressure fuel injection into the cylinder in the compression stroke.

Generally, in the fuel injection valve for injecting the high-pressure fuel, a seat portion is closed by a valve element at the time of valve closing operation, and the valve element is moved to open seat portion at the time of valve opening operation. Thus, the high-pressure fuel is injected through injection openings provided on a downstream side of the seat portion.

### Problem to be Solved by the Invention

In the fuel injection valve, on the downstream side (in the side of the end of the injection valve), a space communicating with the injection openings is inevitably provided, although the volume thereof varies. When the seat portion is closed by the valve element and the fuel injection is completed, the space is filled with the fuel having a high pressure that is substantially the same as that in the cylinder at the completion of fuel injection.

The fuel filled in the space does not flow out into the cylinder having an increased pressure in subsequent compression stroke and at the time of combustion. However, when the intra-cylinder pressure is reduced at the second-half stage of a subsequent expansion stroke, the fuel is brought to a boil under reduced pressure, and flows out into the cylinder. The fuel, which has flowed out into the cylinder, is not burned and is emitted as unburned fuel from the cylinder, thereby causing degradation in exhaust emission.

### SUMMARY OF THE INVENTION

Accordingly, an object of the invention is to prevent the degradation in exhaust emission that can be caused by fuel flowing out from a fuel injection valve in the second-half stage of an expansion stroke in an internal combustion engine in which fuel is injected into a cylinder in a compression stroke. More specifically, an internal combustion engine of the invention is characterized in that a part of intra-cylinder burned gas containing fuel that has flowed out from a sac portion into the cylinder in the expansion stroke is returned into an engine intake system. This enables unburned gas to be burned and thus prevents degradation in the exhaust emission caused by the unburned fuel exhausted as it is.

### BRIEF DESCRIPTION OF THE DRAWINGS

The invention will be described using the following drawings.
Fig. 1 is a schematic cross sectional view showing an internal combustion engine of a first embodiment according to the invention;
Fig. 2 is a cross sectional view showing an end portion of a fuel injection valve used in the internal combustion engine shown in Fig. 1;
Fig. 3 is a cross sectional view of the end portion of the fuel injection valve shown in Fig. 2 in a state where a first injection opening is opened;
Fig. 4 is a cross sectional view of the end portion of the fuel injection valve shown in Fig. 2 in a state where the first injection opening and a second injection opening are opened;
Fig. 5 is a time chart showing lifting of an intake valve in the internal combustion engine of the first embodiment;
Fig. 6 is a schematic cross sectional view showing the internal combustion engine in Fig. 1 in the vicinity of an expansion bottom dead center;

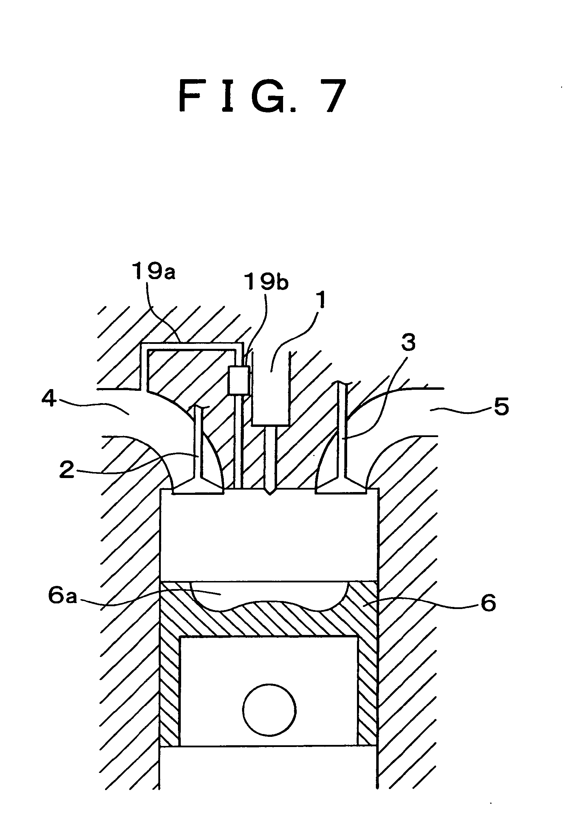

Fig. 7 is a schematic cross sectional view showing a modified example of the internal combustion engine according to the first embodiment;
Fig. 8 is a schematic cross sectional view showing an internal combustion engine of a second embodiment according to the invention;
Fig. 9 is a cross sectional view showing an end portion of a fuel injection valve according to a third embodiment of the invention;
Fig. 10 is a schematic bottom view of an end portion of the fuel injection valve according to the third embodiment;
Fig. 11 is a cross sectional view of the end portion of the fuel injection valve shown in Fig. 9 in a state where a first injection opening is opened;
Fig. 12 is a cross sectional view of the end portion of the fuel injection valve shown in Fig. 9 in a state where the first injection opening and a second injection opening are opened;
Fig. 13A is an enlarged view of an injection opening other than an emitting injection opening of a second injection opening group of the fuel injection valve shown in Fig. 9;
Fig. 13B is an enlarged view of the emitting injection opening of the second injection opening group of the fuel injection valve shown in Fig. 9;
Fig. 14 is a schematic bottom view of an end portion of a fuel injection valve according to a fourth embodiment of the invention;
Fig. 15 is a cross sectional view of the end portion of the fuel injection valve according to the fourth embodiment of the invention;
Fig. 16 is a cross sectional view taken along the cross-section indicating line XIV-XIV of Fig. 9;
Fig. 17 is a cross sectional view of the end portion of the fuel injection valve shown in Fig. 15 in a state where a first injection opening is opened; and
Fig. 18 is a cross sectional view of the end portion of the fuel injection valve shown in Fig. 15 in a state where the first injection opening and a second injection opening are opened.

### DESCRIPTION OF THE PREFERRED EMBODIMENTS

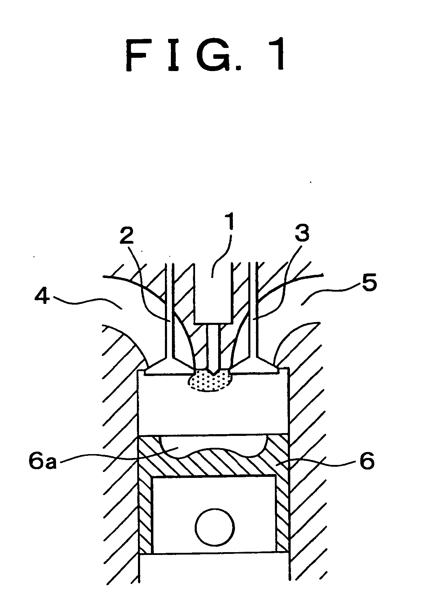

Hereinbelow, embodiments of the invention will be described with reference to the accompanying drawings. Fig. 1 is a schematic cross sectional view showing an internal combustion engine of a first embodiment according to the invention. A fuel injection valve according to the present embodiment is used to directly inject fuel into combustion chamber of a diesel engine.

Referring to Fig. 1, the internal combustion engine includes a fuel injection valve 1 for injecting fuel into a cylinder, an intake valve 2, an exhaust valve 3, an intake port 4 communicating with the cylinder through the intake valve 2, an exhaust port 5 communicating with the cylinder through the exhaust valve 3, and a piston 6. A combustion chamber 6a is formed on the top surface of the piston 6. Fuel is injected through the fuel injection valve 1 into the combustion chamber 6a at an end stage of a compression stroke, and the injected fuel is ignited and burned in the combustion chamber 6a.

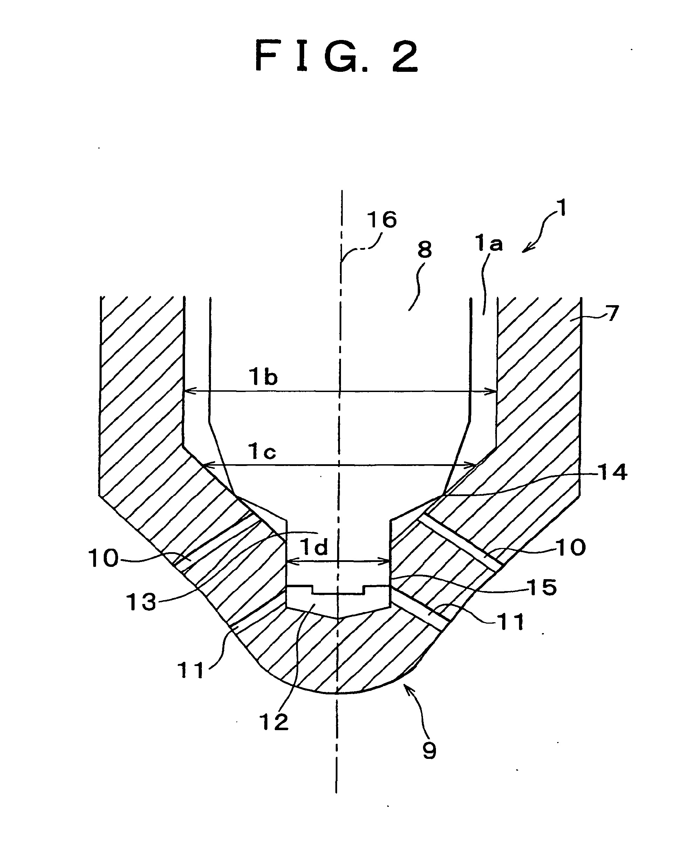

Fig. 2 is a schematic cross sectional view of an end portion of the fuel injection valve 1. A fuel passage 1a is formed inside a nozzle body 7 of the fuel injection valve 1, as shown in Fig. 2. The fuel passage 1a includes a large diameter portion 1b, a truncated conical tapered portion 1c, and a small diameter portion 1d. The large diameter portion 1b receives high pressure fuel fed from, for example, an accumulator common to individual cylinders. The truncated conical tapered portion 1c is connected to the large diameter portion 1b and is tapered toward the end of the fuel injection valve 1. The small diameter portion 1d is formed nearer to the end of the nozzle body 7 than the tapered portion 1c. In addition, a valve element 8 is housed in the nozzle body 7 to reciprocate therein. An angular portion of the valve element 8 contacts the tapered portion 1c of the fuel passage 1a, and a portion in the contact position of the tapered portion 1c is used as a seat portion 14.

First and second injection opening groups 10 and 11 are formed in the nozzle body 7 in decreasing order of remoteness from an end portion 9 of the nozzle body 7. The individual injection openings are formed to communicate with the fuel passage 1a at portions positioned nearer to the end of the nozzle body 7 than the seat portion 14. In the fuel passage 1a, when the angular portion of the valve element 8 is lifted away from the seat portion 14 to open the fuel passage 1a, the high pressure fuel fed into the fuel passage 1a is injected into the cylinder from the injection openings 10 and 11.

As shown in Fig. 2, the fuel injected by the fuel injection valve 1 flows from the upper portion to the lower portion and is then injected from the first and second injection opening groups 10 and 11. Hereinbelow, the upper portion and the lower portion in Fig. 2 will be referred to as an upstream side and a downstream side, respectively. From this viewpoint, the first injection opening group 10 is positioned on the upstream side of the injection openings 11.

The fuel injection valve 1 of the invention is structured such that, on the downstream side of the seat portion 14, a plurality of injection openings 10 are radially formed to communicate with the tapered portion 1c In addition, a plurality of injection openings 11 is radially formed to communicate with the small diameter portion 1d. The plurality of injection openings communicating with the tapered portion 1c form the first injection opening group 10, and the plurality of injection openings communicating with the small diameter portion 1d form the second injection opening group 11. Each opening of the first and second injection opening groups 10 and 11 is formed to extend through the nozzle body 7 so that an entry thereof opens on the inside of the nozzle body 7 and the outlet thereof opens in the outside of the nozzle body 7. An end portion of the valve element 8 is formed to be engaged with the small diameter portion 1d of the fuel passage 1a.

The injection openings of the first injection opening group 10 are formed about a longitudinal axis line 16 of the fuel injection valve 1 at identical angular intervals. That is, the injection openings of the first injection opening group 10 are disposed at equal intervals in the same direction. Moreover, the individual injection openings of the first injection opening group 10 are formed substantially identical to one another in the relative positional relationship with respect to the longitudinal axis line 16 of the fuel injection valve 1. Specifically, the individual injection openings of the first injection opening group 10 extend at identical angles with respect to the longitudinal axis line 16 of the fuel injection valve 1. Similarly, with the exception of one injection opening of the injection openings forming the second injection opening group 11, all the injection openings thereof are formed about the longitudinal axis line 16 of the fuel injection valve 1 at identical angular intervals. Also, the injection openings are formed to be substantially identical to one another in the relative positional relationship with respect to the longitudinal axis line 16 of the fuel injection valve 1. That is, the injection opening groups 10 and 11 are individually disposed on concentric circles with different diameters whose center is the fuel injection valve 1, and the injection openings thereof are disposed at equal intervals. In addition, the diameter of each injection opening of the first injection opening group 10 is smaller than the diameter of each injection opening of the second injection opening group 11.

A sac portion 12 is provided near the end portion 9 in the nozzle body 7. The sac portion 12 is a cylindrical volumetric space, and is connected to the entries of the injection openings of the second injection opening group 11. That is, the sac portion 12 communicates with the injection openings of the second injection opening group 11. The sac portion 12 can receive a protruding end portion 13 of the valve element 8. The seat portion 14 is provided between the nozzle body 7 and the valve element 8 and upstream of the second injection opening group 11. Further, a sliding seal portion 15 is provided between the nozzle body 7 and the protruding end portion 13 of the valve element 8, and upstream of the second injection opening group 11. The seat portion 14 and the sliding seal portion 15 work as seals between the nozzle body 7 and the valve element 8 according to the lift amount of the valve element 8.

Next, operations of the fuel injection valve of the present embodiment will be described. Specifically, a description will be made regarding an event when the valve element 8 is in the state shown in Fig. 2. More specifically, a description will be made regarding an event when the seat portion 14 seals the portion between the nozzle body 7 and the valve element 8, and the sliding seal portion 15 seals the portion between the nozzle body 7 and the protruding end portion 13 of the valve element 8. At this time, the valve element 8 closes the injection openings of the first and second injection opening groups 10 and 11. As such, no fuel is injected from the injection openings of the first and second injection opening groups 10 and 11. Hereinbelow, the term "non-injection" is used to indicate an event when no fuel is injected from the injection openings of the first and second injection opening groups 10 and 11 as described above. At this time, the lift amount of the valve element 8 with respect to the nozzle body 7 is zero.

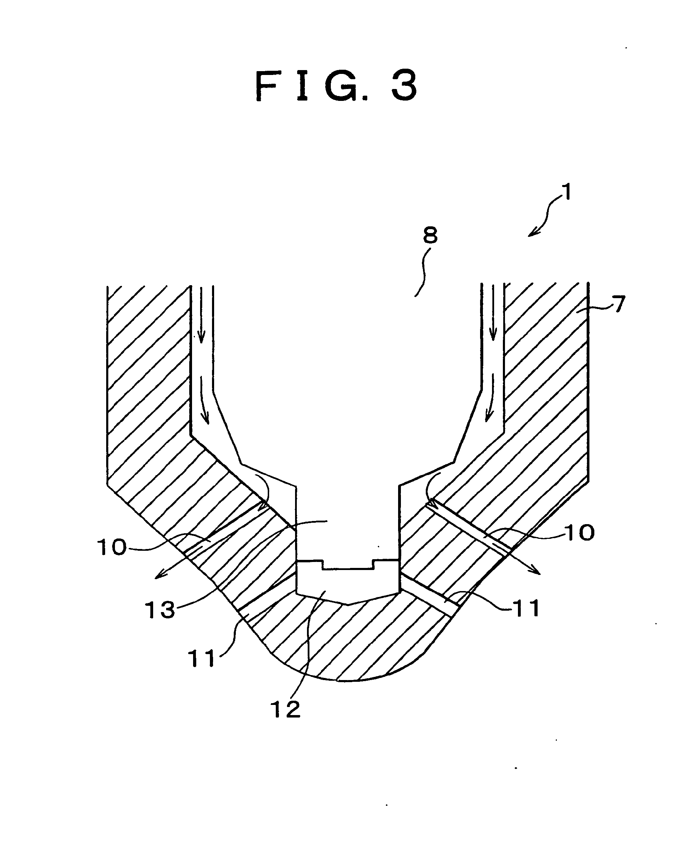

The fuel injection valve 1 is capable of lifting the valve element 8 in two stages. When the valve element 8 is lifted to a state shown in Fig. 3, the sealing engagement of the seat portion 14 between the nozzle body 7 and the valve element 8 is released, and the injection openings of the first injection opening group 10 are therefore opened. At this time, the protruding end portion 13 of the valve element 8 remains engaged with the small diameter portion 1d of the fuel passage 1a. That is, the portion between the nozzle body 7 and the protruding end portion 13 of the valve element 8 remains sealed by the sliding seal portion 15. Therefore, the injection openings of the second injection opening group 11 are closed. At this time, as shown by arrows, the fuel flows from the upstream side to the vicinity of the end through the space between the nozzle body 7 and the valve element 8, and is then injected only through the first injection opening group 10. Hereinbelow, the lift amount of the valve element 8 with respect to the nozzle body 7 at this time will be referred to as a first lift amount, and the fuel injection in this case will be referred to as "half-open injection".

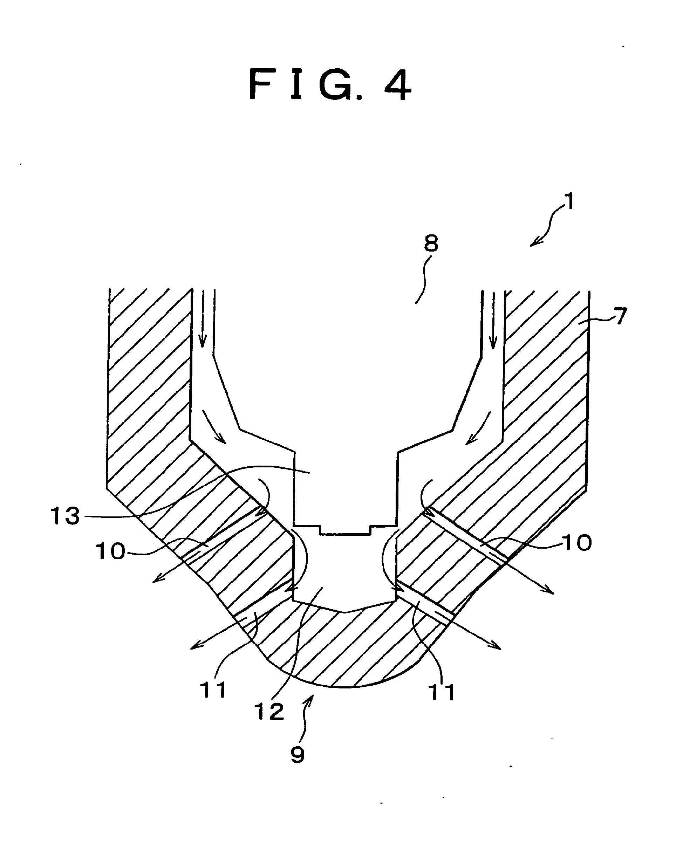

When the valve element 8 is lifted up to a state shown in Fig. 4, the sealing engagement of the seat portion 14 between the nozzle body 7 and the valve element 8 is released, and the first injection opening group 10 is therefore opened. In addition, the sealing engagement of the sliding seal portion 15 between the nozzle body 7 and the protruding end portion 13 of the nozzle body 7 is released, and the second injection opening group 11 is therefore opened. At this time, as shown by arrows, the fuel flows from the upstream side to the vicinity of the end through the space between the nozzle body 7 and the valve element 8, and is then injected from the first and second injection opening groups 10 and 11.

Hereinbelow, the lift amount of the valve element 8 with respect to the nozzle body 7 in this case will be referred to as a second lift amount. The term "full-open injection" is used to indicate the injection when the fuel is injected from the injection openings of the first and second injection opening groups 10 and 11.

When the first and second injection opening groups 10 and 11 are closed, the lift amount of the valve element 8 with respect to the nozzle body 7 is zero. This event hereinbelow will be referred to as "non-injection".

As described above, according to the present embodiment, fuel injection can be implemented through the first injection opening group 10, and fuel injection can be implemented through the first and second injection opening groups 10 and 11. In the configuration in which the opening of the first injection opening group 10 is smaller in diameter than the opening of the second injection opening group 11, the fuel injected from the first injection opening group 10 can easily be atomized. As such, even when the engine is in a low load state where a relatively small amount of fuel injection is required, and fuel is injected with the lift amount of the valve element 8 being set to the first lift amount and only with the first injection opening group 10 being used, a large part of the injected fuel can be well burned and the emission of unburned fuel can sufficiently be reduced.

In addition, when the engine is in a high load state where a relatively large amount of fuel injection is required, a sufficient amount of fuel cannot be injected only from the first injection opening group 10. According to the embodiment, however, the lift amount of the valve element 8 is set to the second lift amount, thereby enabling a relatively large amount of the fuel to be injected through the first and second injection opening groups 10 and 11.

As described above, the valve element 8 moves to the position where the lift amount is zero after it is lifted and the fuel injection valve 1 performs either full-open injection or half-open injection. At this time, a space is formed between the nozzle body 7 and the valve element 8 in the sac portion 12. The space is formed because the nozzle body 7 and the valve element 8 cannot be manufactured to completely engage with each other. Fuel remains in the space when the lift amount of the valve element 8 is zero.

In the above-described fuel injection valve 1, the protruding end portion 13 of the valve element 8 engages with the small diameter portion 1d of the fuel passage 1a to the position of the second injection opening group 11 when the angular portion of the valve element 8 is controlled to contact the seat portion 14 in the fuel passage 1a, and fuel injection is thereby completed. That is, in the configuration in which the second injection opening group 11 is closed, the sac portion 12 is completely closed. In this state, no place exits to receive the fuel in the sac portion 12, and secured closure of the seat portion 14 by using the valve element 8 cannot be ensured. The fuel remaining in the sac portion 12 is then compressed by the valve element 8. The pressure of the fuel before compression by the valve element 8 is substantially the same as the injection pressure. That is, the fuel remaining in the sac portion 12 has a very high pressure even before it is compressed by the valve element 8. As such, the pressure of the high-pressure fuel remaining in the sac portion 12 becomes even higher due to the compression by the valve element 8. Thus, this may place a burden on the end portion of the fuel injection valve 1 in some cases.

In consideration of the above, the end portion of the valve element 8 is formed so as not to close the second injection opening group 11 at the completion of fuel injection. Specifically, at this time, the second injection opening group 11 communicates with the sac portion 12 filled with the fuel in the small diameter portion 1d. At the completion time of fuel injection, the pressure of the fuel filled in the sac portion 12 is substantially the same as the intra-cylinder pressure in an end stage of a compression stroke at the completion time of fuel injection, and is therefore relatively high. Thereafter, the fuel pressure is further increased as the intra-cylinder pressure is increased due to combustion. However, when the intra-cylinder pressure is reduced in the second-half stage of an expansion stroke to be lower than that in the end stage of a compression stroke, the fuel in the sac portion 12 is brought to a boil under reduced pressure, and flows as gaseous fuel from the second injection opening group 11 into the cylinder.

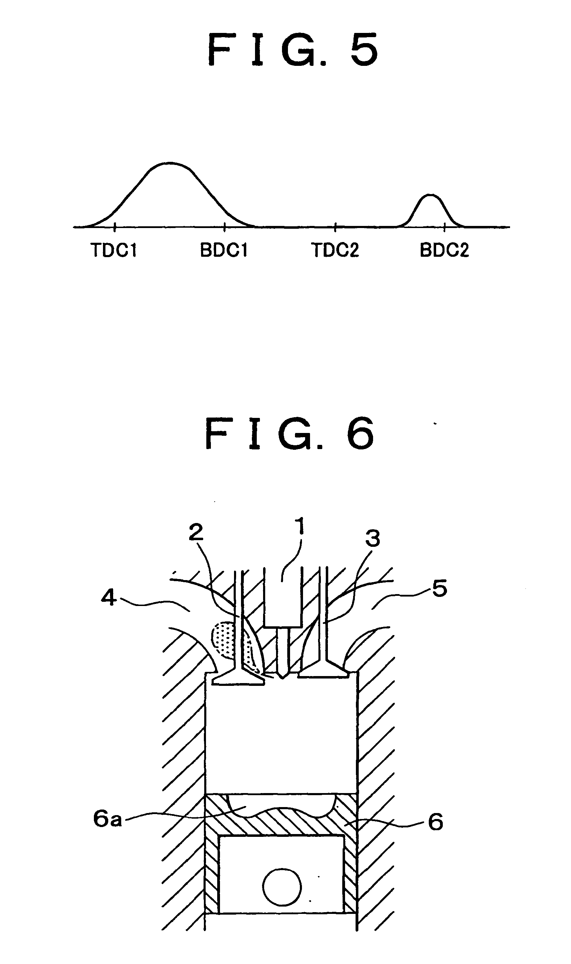

In a typical internal combustion engine, such gaseous fuel is not burned and is hence exhausted from a cylinder as unburned fuel in an exhaust stroke. It is difficult to completely purge the unburned fuel through a catalytic device, and degradation in exhaust emission may be caused. The internal combustion engine of the invention is to improve the probability of the degradation in exhaust emission. As shown in Fig. 5, the intake valve 2 is opened for intake of air primarily not only in an intake stroke (for example, from a stage of immediately before an intake top dead center TDC1 to an intake bottom dead center BDC1), but also in the second-half stage of an expansion stroke (for example, in a stage in the vicinity of an expansion bottom dead center BDC2).

In the internal combustion engine of the embodiment, as in a typical internal combustion engine, the fuel injection valve 1 is disposed on an upper portion of the cylinder. As shown by dots in Fig. 1, a part of intra-cylinder burned gas containing fuel that has flowed out as gaseous fuel from the fuel injection valve 1 is positioned near the fuel injection valve 1 provided on the upper portion of the cylinder. In addition, the intake valve 2 is disposed on an upper portion of the cylinder to be adjacent to the fuel injection valve 1. As such, as shown by dots in Fig. 6, when the intake valve 2 is opened in a second-half stage of the expansion stroke, the part of the burned gas is returned into the intake port 4 through the adjacent intake valve 2 due to a differential pressure occurring at that time between the pressure of the overall burned gas in the cylinder and the pressure in the intake port 4.

Subsequently, the exhaust valve 3 is opened as an exhaust operation concurrently with, or before or after the opening operation of the intake valve 2, and a remaining part of the burned gas in the cylinder is thus exhausted from the exhaust port 5. Since the remaining part of the burned gas does not contain the gaseous fuel that has flowed out from the fuel injection valve 1, it does not cause degradation in exhaust emission.

Subsequent to the exhaust stroke, in an intake stroke, the intake valve 2 is opened. Thus, the part of the burned gas, which contains the gaseous fuel returned into the intake port 4, is fed into the cylinder together with intake gas. Since the gaseous fuel is burned during combustion in an end stage of a compression stroke, it is not exhausted as unburned fuel, and thus it does not cause degradation in exhaust emission.

In the internal combustion engine of the embodiment, although the intake valve 2 is opened primarily in the second-half stage of the expansion stroke, the intake valve 2 may be controlled to open primarily in an initial stage of the exhaust stroke. In this case, the intake valve 2 is preferably controlled to open before the exhaust valve 3 opens. However, according to the configuration in which the fuel injection valve 1 is disposed closer to the intake valve 2 than to the exhaust valve 3, even when the intake valve 2 and the exhaust valve 3 are opened concurrently, the part of the burned gas which contains the gaseous fuel can be returned into the intake port 4. Naturally, even in this case, the intake valve 2 is opened earlier as compared with the exhaust valve 3 that is closed in the vicinity of an exhaust top dead center.

To enable the intake valve 2 to be opened and closed twice in one cycle as described above, for example, a cam for an intake-valve be arranged to include a first protruding portion for opening and closing the intake valve in the intake stroke and a second protruding portion for opening and closing the intake valve from the second-half stage of the expansion stroke to the first-half stage of the exhaust stroke. Alternatively, an electromagnetic or fluid actuator for opening and closing the intake valve 2 may be used independently or with a valve spring. In this case, the opening/closing timing of the intake valve 2 can be set freely, and opening/closing control of the intake valve 2 can be implemented for the internal combustion engine of the embodiment.

When the engine is in a low load state, the temperature in the cylinder is low. As such, injected fuel is not easily ignited and burned, and unburned fuel tends to occur during burning. In addition, although the catalytic device for purging unburned fuel is provided in an engine exhaust system, since the exhaust gas temperature is low when the engine is in a low load state, activation of the catalytic device tends to be insufficient. Thus, if gaseous fuel that flowed out from the fuel injection valve 1 is additionally exhausted from the cylinder, particularly when the engine is in a low load state, exhaust gas contains a relatively large amount of unburned fuel in addition to the unburned fuel occurring during burning. If the unburned fuel is not sufficiently purged due to insufficient activation of the catalytic device and is exhausted in the atmosphere, the degradation in exhaust emission may be caused.

In contrast, when the engine is in a high load state, since the temperature in the cylinder is high, and the ignition and combustion performance is high, unburned fuel does not easily occur. Moreover, since the exhaust gas temperature is high, and the catalytic device is sufficiently activated, gaseous fuel that has flowed out from the fuel injection valve 1 is relatively well purged by the catalytic device. Thus, the influence on exhaust emission varies depending on the magnitude of the engine load. As such, the intake valve 2 may be opened and closed from the second-half stage of the expansion stroke to the first-half stage of the exhaust stroke only when the engine is in a low load state.

As described above, in the case where the intake valve 2 is opened and closed by using an electromagnetic or fluid actuator, the intake valve can be opened and closed from the second-half stage of the expansion stroke to the first-half stage of the exhaust stroke only when the engine is in a low load state. However, in the case where the intake valve 2 is opened and closed by means of cam, the arrangement is envisaged in which a first cam and a second cam is provided so as to be switchably used. In this case, the first cam is arranged to have two protruding portions and is used when the engine is in a low load state. The second cam is arranged to have one protruding portion and is used when the engine is in a high load state. In this case, the first cam for opening the intake valve 2 in the intake stroke is formed to have the protruding portions in a shape different from that of the protruding portion of the second cam. This arrangement enables valve overlap and the like to be optimal when the engine is in a low load state and in a high load state. Alternatively, the arrangement may be made in which a first cam for opening the intake valve in the intake stroke and a second cam for opening the intake valve from the second-half stage of the expansion stroke to the first-half stage of the exhaust stroke are provided. In this arrangement, the first cam is constantly made operative, the second cam is made operative when the engine is in a low load state, and the second cam is made inoperative when the engine is in a high load state. For example, the arrangement may be such that a contact portion of a valve rocker arm that contacts the second cam is fixed to make the second cam operative, thereby making the exhaust valve operative, and the contact portion is made depressible and movable to make the second cam inoperative so that the exhaust valve cannot operate.

In the internal combustion engine of the embodiment, a part of burned gas containing gaseous fuel that has flowed out from the fuel injection valve is returned into the intake port 4 of the corresponding cylinder through the intake valve 2 by using a differential pressure between the pressure of the intake valve 2 and the pressure of the overall burned gas in the cylinder. Suppose the pressure in the intake port 4 of the corresponding cylinder is increased through, for example, a supercharging operation of a supercharger. In this case, to return the burned gas into the intake port by using the differential pressure, the intake valve 2 is preferably opened when the pressure in the cylinder is relatively high immediately after gaseous fuel has flowed out from the fuel injection valve 1 in the second-half stage of the expansion stroke. Alternatively, the arrangement may be such that, after the pressure in the cylinder is increased without opening the exhaust valve 3 in the expansion stroke and an initial stage of the exhaust stroke, the intake valve 2 is opened concurrently with or before the opening of the exhaust valve 3.

Naturally, if the intake valve can be opened and closed freely, the arrangement may be such that, as the boost pressure provided from the supercharger increases, the opening timing of the intake valve is either delayed or advanced from the expansion bottom dead point so that the intake valve is opened when the intra-cylinder pressure is high. Alternatively, the arrangement may be such that, when the boost pressure provided from the supercharger is higher than a set value, and the burned gas cannot be returned into the intake port by using the differential pressure, the intake valve is prevented from being opened from the second-half stage of the expansion stroke to the first-half stage of the exhaust stroke.

As a modified example of the internal combustion engine, a communication passage 19a may be formed provide communication between the vicinity of the fuel injection valve 1 and the corresponding cylinder. The arrangement may be such that a control valve 19b provided in the communication passage 19a is opened without opening the intake valve 2 from the second-half stage of the expansion stroke to the first-half stage of the exhaust stroke, and a part of burned gas containing gaseous fuel that has flowed out from the fuel injection valve is returned into the intake port 4 through the communication passage 19a. Alternatively, the arrangement may be such that a communication passage as described above does not communicate with the intake port of the corresponding cylinder, but it communicates with an intake port of another cylinder, preferably, a cylinder that is in an intake stroke, and the part of the burned gas containing gaseous fuel is returned into the other cylinder. In this case, the pressure in the intake port of the cylinder, which is in the intake stroke, is relatively low because of suction into the cylinder even when the supercharger is operating. As such, the burned gas can be easily returned into the intake port by using the differential pressure. Naturally, such a communication passage as described above may communicate with either a surge tank or with an upstream portion of the surge tank in the engine intake system.

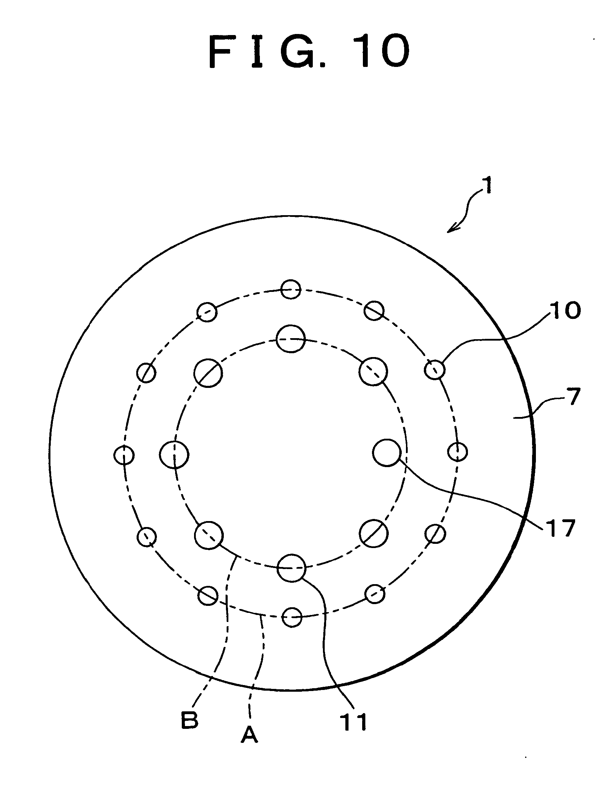

The numbers of the injection openings of the individual first and second injection opening groups 10 and 11 are not limited (the numbers of the injection openings may be the same). Alternatively, the number of the injection openings of the first injection opening group 10 may be smaller than the number of the injection openings of the second injection opening group 11). In Fig. 10, the diameter of the injection opening of the first injection opening group 10 is larger than the diameter of the injection opening of the second injection opening group 11. However, the diameters of the injection openings of the two groups may be the same. Alternatively, the diameter of the injection opening of the second injection opening group 11 may be larger than the diameter of the injection opening of the first injection opening group 10.)

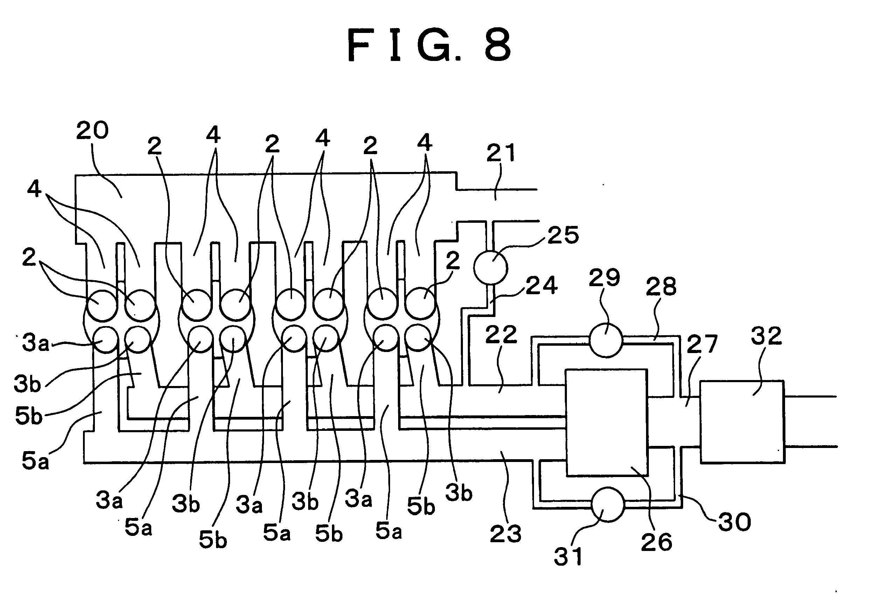

Fig. 8 is an overall configuration view showing an internal combustion engine of a second embodiment according to the invention. The internal combustion engine includes a plurality of cylinders. Each of the cylinders includes two intake valves 2 and two exhaust valves 3a and 3b. The individual cylinders communicate with a surge tank 20 common to the cylinders through the two intake valves 2 by means of corresponding intake ports 4. An upstream-side intake passage 21 is connected to the upstream side of a surge tank 20. The intake ports 4, the surge tank 20, and the upstream-side intake passage 21 constitute the engine intake system.

Each of the cylinders communicates with a first exhaust passage 22 common to the cylinders through the exhaust valve 3b on one side by means of a corresponding exhaust port 5b. Also, each of the cylinders communicates with a second exhaust passage 23 common to the cylinders through the exhaust valve 3a on the other side by means of a corresponding exhaust port 5a. The first exhaust passage 22 communicates with the upstream-side intake passage 21 by means of an exhaust gas recirculation passage 24, which functions as a communication passage. Numeral 25 represents a control valve disposed in the exhaust gas recirculation passage 24.

A first exhaust passage 22 and a second exhaust passage 23 communicate with a single turbine 26 of a turbocharger. A downstream-side exhaust passage 27 is connected to a downstream side of the turbine 26. A first wastegate passage 28 is connected to bypass the turbine 26 from the first exhaust passage 22 to the downstream-side exhaust passage 27. Also, a second wastegate passage 30 is connected to bypass the turbine 26 from the second exhaust passage 23 to an exhaust passage 14. A first wastegate valve 29 and a second wastegate valve 31 are disposed in the first wastegate passage 28 and the second wastegate passage 30, respectively. On the downstream side of the connected position of the first and second wastegate passages 28 and 30, a catalytic device 32 for purging harmful components contained in exhaust gas is disposed in the downstream-side exhaust passage 27.

In the individual cylinders, both fuel injection valves (not shown) and the exhaust valves 3b on one side are positioned on upper portions of the cylinders and are disposed to be adjacent to one another. In the internal combustion engine thus configured, first, the exhaust valve 3b on one side is opened from the second-half stage of an expansion stroke to the first-half stage of an exhaust stroke. Subsequently, the exhaust valve 3a on the other side is opened before or after the opening of the exhaust valve 3b on the other side, and it is closed in the vicinity of an exhaust top dead center.

Thus, a part of burned gas containing gaseous fuel in the vicinity of the fuel injection valve flows out to the first exhaust passage 22 through the exhaust valve 3b on one side. The part of the burned gas then flows from the first exhaust passage 22 into the upstream-side intake passage 21 through the exhaust gas recirculation passage 24, and is returned into the surge tank 20. The remaining burned gas in the cylinder flows out to the second exhaust passage 23 through the exhaust valve 3a. Thereafter, the remaining burned gas passes through the catalytic device 32 via the turbine 26 and is then emitted into the atmosphere.

Even when the catalytic device 32 has not been sufficiently activated at this time, burned gas containing gaseous fuel that has flowed out from the fuel injection valve is returned into the surge tank 20, and there is no such a case in which burned gas containing much unburned fuel is not sufficiently purged by the catalytic device 32 and is emitted into the atmosphere. The part of the burned gas containing gaseous fuel, which has been returned into to the surge tank 20, is then fed, together with intake air, into the cylinder waiting for a subsequent intake stroke through the corresponding intake port 4. Since the gaseous fuel is burned during combustion in an end stage of a compression stroke, the gaseous fuel is not exhausted from the cylinder as unburned fuel.

In the internal combustion engine, as in the above-described internal combustion engine, the exhaust emission is considerably degraded when the engine is in a low load state. As such, the arrangement may be made such that the control valve 25 is opened only when the engine is in a low load state, and the part of the burned gas containing gaseous fuel is returned into the surge tank 20 through the exhaust gas recirculation passage 24. Alternatively, when the engine is in a high load state, the two exhaust valves 3a and 3b may be opened concurrently in the vicinity of the expansion bottom dead center. As in the case of the above-described intake valve, to change the opening/closing timings of the two exhaust valves 3a and 3b when the engine is in a low load state and a high load state, for example, two types of cams may be switchably used for each of the exhaust valves. Alternatively, an electromagnetic or fluid actuator may be used to open and close each of the exhaust valves freely.

In the internal combustion engine of the present embodiment, the turbine 26 of the turbocharger is driven by exhaust gases fed from the first and second exhaust passages 22 and 23. When there is a difference in the flow rates of the exhaust gases fed from the individual exhaust passages, the turbine 26 cannot be efficiently driven. In the internal combustion engine of the embodiment, the flow rate of the exhaust gas fed from the first exhaust passage 22 into the turbine 26 is considerably lower than the flow rate of the exhaust gas fed from the second exhaust passage 23 to the turbine 26. This is because the amount of burned gas exhausted from the cylinder into the first exhaust passage 22 is relatively small, and a large part of the gaseous fuel is returned into the surge tank 20.

Taking the above into account, control is performed such that the opening of the second wastegate valve 31 becomes larger than that of the first wastegate valve 29, and the flow rates of the exhaust gases fed from the first and second exhaust passages 22 and 23 to the turbine 26 become substantially equal, thereby improving the turbine efficiency. Alternatively, control may be performed such that the lift amount of the exhaust valve 3b on one side becomes smaller that the lift amount of the exhaust valve 3a on the other side to increase the flow rate of the exhaust gas fed from the first exhaust passage 22 to the turbine 26, and the velocity of the part of the burned gas exhausted from each of the cylinders into the first exhaust passage 22 is thus increased.

In the internal combustion engine of the present embodiment and the above-described internal combustion engine, the part of the burned gas is consequently recirculated into the cylinder. In addition, inert gas as a principal component of the burned gas has a high thermal capacity and reduces the combustion temperature. Therefore, NOx generation can be suppressed. The above-described recirculation is known as exhaust gas recirculation. It is preferable to recirculate a large amount of burned gas depending on the engine operating state. As such, to recirculate an optimal amount of the burned gas, according to the engine operating state, it is preferable to control the opening period of the intake valve from the second-half stage of the expansion stroke to the first-half stage of the exhaust stroke according to the engine operating state in the above-described internal combustion engine. Similarly, in the internal combustion engine of the present embodiment, it is preferable to control the opening period of the exhaust valve on one side from the second-half stage of the expansion stroke to the first-half stage of the exhaust stroke, according to the engine operating state.

In the internal combustion engine of the embodiment, another exhaust gas recirculation passage may be provided so that the second exhaust passage 23 communicates with the upstream-side intake passage 21. In this arrangement, exhaust gas is recirculated also from the second exhaust passage 23 through the aforementioned exhaust gas recirculation passage in an engine operating state in which the amount of exhaust gas is insufficient when exhaust gas is recirculated only from the first exhaust passage 22.

The catalytic device 32 disposed in the downstream-side exhaust passage 27 is, for example, an NOx absorption reduction catalytic device. The NOx absorption reduction catalytic device efficiently absorbs NOx in exhaust gas when the exhaust gas is in a lean state, and emits NOx when the exhaust gas is in a stoichiometric or rich state, thereby performing reductive purging of NOx by using a reduction substance in the exhaust gas. The reductive purging uses an oxidation catalyst supported by the NOx absorption reduction catalytic device. By using the oxidation catalyst, the NOx absorption reduction catalytic device can oxidize and purge unburned fuel and carbon monoxide contained in the exhaust gas.

Each of the above-described two internal combustion engines is a diesel engine, and exhaust gas exhausted from the diesel engine contains Nox, and is in a lean state. As such, NOx in the exhaust gas is efficiently absorbed by the NOx absorption reduction catalytic device 32. However, since an NOx absorbable amount in the NOx absorption reduction catalytic device 32 is limited, absorbed NOx needs to be reductively purged before an NOx absorption amount reaches the NOx absorbable amount in the NOx absorption reduction catalytic device 32, and the NOx absorption reduction catalytic device 32 needs to be regenerated.

At the time of this regeneration, it is possible to use gaseous fuel that has brought to a boil under reduced pressure and has flowed out from the fuel injection valve. That is, in the internal combustion engine of the first embodiment, the intake valve 2 is not opened from the second-half stage of the expansion stroke to the first-half stage of the exhaust stroke, and the part of the burned gas containing gaseous fuel is made to flow out from the exhaust valve 3 and is positively fed to the NOx absorption reduction catalytic device 32 in order to regenerate the NOx absorption reduction catalytic device 32.

In the internal combustion engine of the second embodiment, the arrangement may be made such that the control valve 25 in the exhaust gas recirculation passage 24 is opened, and the part of the burned gas containing gaseous fuel is not returned into the surge tank 20. If the another exhaust gas recirculation passage is also provided in the second exhaust passage 23 as described above in this case, the exhaust gas recirculation passage can be used to implement the exhaust gas recirculation. In this case, control is preferably performed such that when the flow rate of the exhaust gas flowing from the first exhaust passage 22 into the turbine 26 becomes higher than the flow rate of the exhaust gas flowing from the second exhaust passage 23 into the turbine 26, the opening of the first wastegate valve 29 is increased to be larger than the opening of the second wastegate valve to make both the flow rates substantially equal.

The exhaust gas of the internal combustion engine also contains SOx, and the NOx absorption reduction catalytic device 32 absorbs SOx as well as NOx. SOx is not emitted even when an atmosphere in the vicinity of the NOx absorption reduction catalytic device 32 is caused to be stoichiometric or rich. As such, even when the above-described regeneration is performed in the NOx absorption reduction catalytic device 32, the SOx absorption amount gradually increases, and thus the NOx amount that can be absorbed is reduced. To emit SOx, the temperature of the NOx absorption reduction catalytic device 32 is increased to enrich the atmosphere in the vicinity of the catalytic device 32.

SOx-poisoning recovery is preferably performed after the NOx absorption reduction catalytic device has absorbed a certain amount of SOx. When the SOx-poisoning recovery is performed, a larger amount of unburned fuel than that at the time of the regeneration is fed into the NOx absorption reduction catalytic device 32, the oxidation catalyst supported by the NOx absorption reduction catalytic device catalytic device is used to burn a part of the unburned fuel, heat generated during the burning is used to heat the NOx absorption reduction catalytic device, and SOx emitted from the remaining unburned fuel is reductively purged. Thus, as in the regeneration, the gaseous fuel that has flowed out from the fuel injection valve is fed into the NOx absorption reduction catalytic device, the amount of intake air is increased by supercharging or the like to reduce the amount of recirculation exhaust gas, and the temperature in the cylinder is thus reduced. Thus, a part of the fuel injected in an end stage of a compression stroke is exhausted as unburned fuel, and the unburned fuel is then fed into the NOx absorption reduction catalytic device. At this time, the opening timing of the exhaust valve is preferably advanced to prevent the temperature of the exhaust gas from being reduced according to the reduction in the combustion temperature.

In this manner, fuel can be controlled to flow out from a specific injection opening in the second-half stage of the expansion stroke. That is, the flow direction of fuel flowing out from the fuel injection valve can be designated. In the internal combustion engine of the first embodiment, since a part of burned gas containing fuel that has flowed out is returned into the intake port through the intake valve, the fuel flow direction is preferably set to the direction of the intake valve. In the internal combustion engine of the double intake valve type, when fuel is controlled to flow out from a single injection opening, and the fuel flow direction is set to one direction, the fuel is preferably directed to a portion between the two intake valves. In this case, a bump is preferably provided between the two intake valves in the cylinder head so that the fuel flowing out does not stagnate between the two intake valves. In addition, when the fuel flows out from two injection openings, and the fuel flow direction is set to two directions, the fuel is preferably directed to either the center or the periphery of each of the two intake valves.

In the internal combustion engine of the second embodiment, a part of burned gas containing the fuel that has flowed out is returned into the surge tank from the first exhaust passage through the exhaust valve on one side. Therefore, the fuel flow direction is preferably set to the direction of the exhaust valve on one side. The internal combustion engine of the second embodiment includes the two exhaust passages. In the internal combustion engine of the second embodiment, a part of burned gas containing the fuel that has flowed out is exhausted into the exhaust passage on one side (first exhaust passage 22) and is returned therefrom into the surge tank. However, this does not limit the invention. For example, the arrangement may be such that, in an internal combustion engine including at least one exhaust valve, the exhaust valve is opened after the second-half stage of an expansion stroke, and burned gas is returned from an exhaust port positioned on the upstream side of an exhaust gas collecting portion of each cylinder into a surge tank or an intake passage positioned on the upstream side of the surge tank immediately after the opening of the exhaust valve. When an exhaust valve positioned in the vicinity of a fuel injection valve is opened, a part of burned gas containing the fuel that has flowed out in the vicinity of the fuel injection valve is first exhausted into the exhaust port. In this case, the part of the burned gas may be returned into the surge tank through a communication passage that provide communication between the exhaust port and, for example, the surge tank.

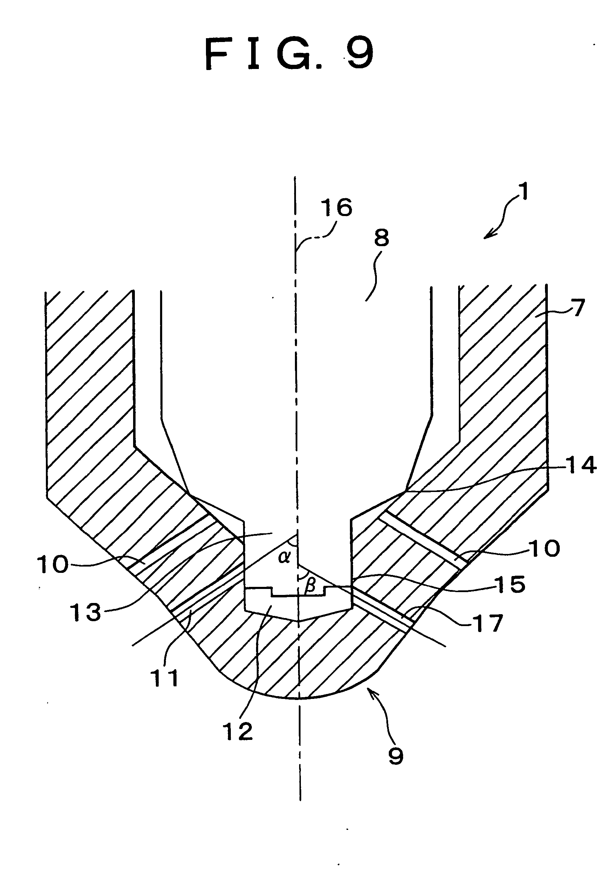

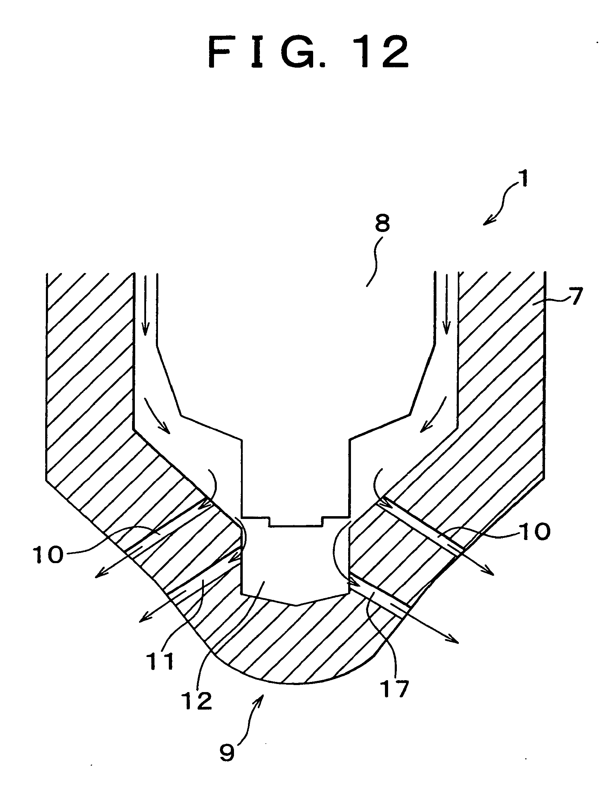

Next, referring to Figs. 9 to 13, a third embodiment of the invention will be described. The same component numbers will be given to components having the same constructions as those of the above-described internal combustion engines, and detailed descriptions thereof will be omitted herefrom.

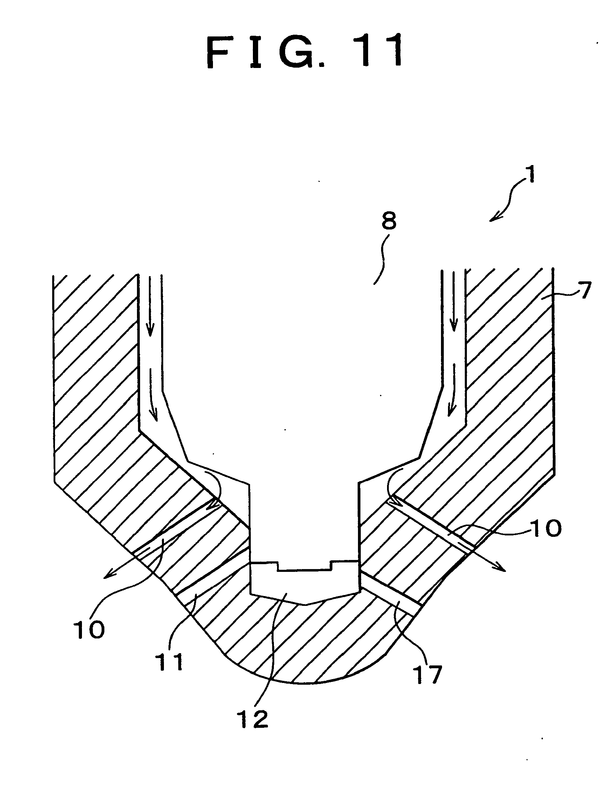

The third embodiment is different from the first embodiment in the second injection opening group. Hereinbelow, a second injection opening group 11 will be described in detail with reference to Figs. 9, 10, and 13. Operations associated with half-open injection shown in Fig. 11 and operations associated with full-open injection are the same as those in the first embodiment that are shown in Figs. 3 and 4. Therefore, detailed descriptions thereof will be omitted. Fig. 9 corresponds to Fig. 2 in the first embodiment and is a cross sectional view of an end portion of a fuel injection valve of the third embodiment. Fig. 10 is a schematic bottom view of the fuel injection valve. As shown in Figs. 9 and 10, one injection opening 17 (which hereinbelow will be referred to as an emitting injection opening) of the second injection opening group 11 is disposed slightly downstream of other injection openings of the second injection opening group 11. As such, at the time of non-injection, that is, when the lift amount of the valve element 8 is zero, although the entries of the injection openings other than the emitting injection opening 17 of the second injection opening group 11 are closed by a valve element 8 as described above, the entry of the emitting injection opening 17 is kept open to the sac portion 12. At this time, it is preferable that the entry of the emitting injection opening 17 be completely opened to the sac portion 12. In other words, it is preferable that the valve element 8 should not cover the entry of the emitting injection opening 17 at all. In addition, the valve element 8 is formed to close the injection openings other than the emitting injection opening 17 of the second injection opening group 11 also at the time of half-open injection, that is, when the lift amount of the valve element 8 is a first lift amount.

As shown in Fig. 9, the symbol α represents the angle of each of the injection openings other than the emitting injection opening 17 of the second injection opening group 11 with respect to the longitudinal axis line 16 of the fuel injection valve 1. In addition, the symbol β represents the angle of the emitting injection opening 17 of the second injection opening group 11 with respect to the longitudinal axis line 16 of the fuel injection valve 1. The angle α of the injection opening other than the emitting injection opening 17 of the second injection opening group 11 is an angle determined such that a target destination point of fuel injected from each of the injection openings at the time of full-open injection exists on a circle whose center is the longitudinal axis line 16 of the fuel injection valve 1. The angle β of the emitting injection opening 17 of the second injection opening group 11 is an angle determined such that a target destination point of fuel injected from the emitting injection opening 17 of the second injection opening group 11 at the time of full-open injection exists on the aforementioned circle. Therefore, since the emitting injection opening 17 of the second injection opening group 11 is disposed slightly downstream of the other injection openings of the second injection opening group 11 as described above, the angle β is determined to be slightly larger than the angle α. More specifically, the angle β of the emitting injection opening 17 with respect to the longitudinal axis line 16 of the fuel injection valve 1 is determined to be slightly larger than the angle α of each of the injection openings other than the emitting injection opening 17 of the second injection opening group 11 with respect to the longitudinal axis line 16 of the fuel injection valve 1.

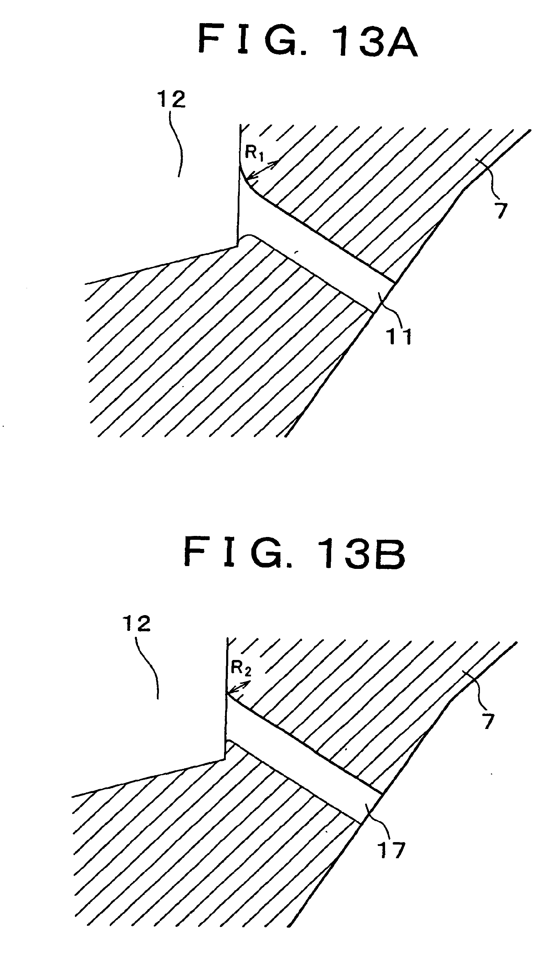

In addition, as shown in Fig. 13, the entry of the emitting injection opening 17 of the second injection opening group 11 is different in shape from the entry of each of the injection openings other than the emitting injection opening 17 of the second injection opening group 11. As shown in Fig. 13A, a curvature portion, which has a radius R1 and spreads toward the sac portion 12, is provided through fluid grinding in the entry of each of the injection openings other than the emitting injection opening 17 of the second injection opening group 11. On the other hand, as shown in Fig. 13B, a curvature portion, which has a radius R2 and spreads toward the sac portion 12, is provided through fluid grinding in the entry of the emitting injection opening 17 of the second injection opening group 11. The radius R2 is smaller than the radius R1. Alternatively, a curvature portion may not be provided in the entry of the emitting injection opening 17 of the second injection opening group 11. That is, the emitting injection opening 17 may be provided for direct communication without processing the vicinity of the entry thereof. The inner wall surface of the emitting injection opening 17 of the second injection opening group 11 is formed to have a surface roughness greater than that of the inner wall surface of the each of the injection openings other than the emitting injection opening 17 of the second injection opening group 11.

The direction of the emitting injection opening 17 is determined such that the target destination point of fuel injected from the emitting injection opening 17 at the time of non-injection is set to a region where the probability that deterioration is promoted due to heat is low among regions on an upper wall surface of the piston. The region is, for example, a region including a piston pin boss. The target destination point in this case refers to the final arrival point of fuel injected in consideration of swirling and the like in the combustion chamber. Therefore, in some cases, the direction of the emitting injection opening 17 is determined such that, while the emitting injection opening 17 is not directly directed to the above-described region and injects fuel in the direction different from the above-described direction, the fuel finally reaches the above-described region.

Hereinbelow, advantages of the fuel injection valve 1 of the present embodiment will be described.

The third embodiment is different from the first embodiment in that, when the lift amount has become zero, since only the emitting injection opening 17 emits fuel remaining in the sac portion 12 due to boiling under reduced pressure in the expansion stroke, the emission pressure and the velocity of the emitting fuel can be increased. As such, the fuel to be emitted into the combustion chamber is atomized. When the fuel has been atomized, oxidation and combustion of the fuel is promoted by residual heat of exhaust gas. Consequently, HC in the exhaust gas is reduced, and the exhaust gas is purged. In addition, the amount of gaseous fuel generated by boiling under reduced pressure is decreased according to a decrease in the number of the injection openings for emitting fuel remaining in the sac portion 12. Consequently, a reduction occurs in the amount of liquid fuel pushed into the combustion chamber by gaseous fuel. This also promotes oxidation and combustion of the fuel, thereby reducing the degree of pollution of exhaust gas.

In addition, at the time of half-open injection, that is, when fuel is injected only from the first injection opening group 10, the fuel may leak from the sliding seal portion 15 into the sac portion 12. In the case where no injection openings of the second injection opening group 11 are closed by the valve element 8 and all the injection openings are kept open at the time of half-open injection, when fuel that has leaked from the sliding seal portion 15 is emitted from the second injection opening group 11, the emission pressure and velocity of the emitting fuel are low. As such, the fuel can adhere to peripheries of the exits of all the injection openings of the second injection opening group 11 and deposits are formed. Deposits formed on all the injection openings hinder the fuel injection from the injection openings at the time of full-open injection, thereby deteriorating the accuracy in the amount of fuel injection from the injection openings of the second injection opening group 11. The deterioration in the accuracy in the amount of fuel injection may cause, for example, pollution of exhaust gas and reduction in the output of the internal combustion engine.

However, in the fuel injection valve 1 of the invention, the valve element 8 is formed to close the injection openings other than the emitting injection opening 17 of the second injection opening group 11 even when the lift amount of the valve element 8 is set to the first lift amount at the time of half-open injection. For this reason, at the time of half-open injection, when fuel that has leaked from the sliding seal portion 15 into the sac portion 12 is emitted from the emitting injection opening 17 of the second injection opening group 11, the emission pressure and velocity of the fuel to be emitted are increased. As such, the fuel is prevented from adhering to peripheries of the exit of the emitting injection opening 17, and formation of deposits in the peripheries of the exit of the emitting injection opening 17 is thus suppressed. Consequently, substantially no deterioration occurs in the accuracy in the amount of fuel injection from the injection openings of the second injection opening group 11.

As described above, the angle β of the emitting injection opening 17 with respect to the longitudinal axis line 16 of the fuel injection valve 1 is larger than the angle α of each of the injection openings other than the emitting injection opening 17 of the second injection opening group 11 with respect to the longitudinal axis line 16 of the fuel injection valve 1. The angles of the second injection opening group 11 are set such that fuel injected from the second injection opening group 11 at the time of full-open injection reaches relatively the same positions with respect to either the wall of the combustion chamber or the upper end surface of the piston. Accordingly, at the time of full-open injection, the fuel injected from the emitting injection opening 17 can be burned under the same conditions as those for the fuel injected from the injection openings other than the emitting injection opening 17 of the second injection opening group 11 to optimize the combustion in the combustion chamber. Thus, the output performance and the exhaust characteristics of the internal combustion engine can be made excellent.

Hereinbelow, a description will be made regarding further advantages of the fuel injection valve of the above-described embodiment. As described above, the radius R2 of the curvature portion spreading toward the sac portion 12 is limited to be small at the entry of the emitting injection opening 17 of the second injection opening group 11. Thus, the flow rate coefficient of the emitting injection opening 17 is reduced, the flow of the fuel passing through the emitting injection opening 17 from the sac portion 12 at the time of non-injection is made non-smooth, and the atomization of the fuel injected from the emitting injection opening 17 is promoted. As such, the atomization of the fuel is performed by reducing the flow rate coefficient of the emitting injection opening 17 in addition to the atomization performed by emitting the fuel remaining in the sac portion 12 only from the emitting injection opening 17 by using boiling under reduced pressure in the expansion stroke when the lift amount of the valve element 8 has become zero. Thus, the degree of pollution of the exhaust gas is reduced. Also in the case where the inner wall surface of the emitting injection opening 17 of the second injection opening group 11 is formed to have increased surface roughness, the flow rate coefficient of the emitting injection opening 17 is reduced. Thus, the atomization of the fuel is promoted.

In the above-described third embodiment of the invention, at the time of non-injection, the entry of the emitting injection opening 17 is completely opened to the sac portion 12. However, the entry of the emitting injection opening 17 need not be completely opened to the sac portion 12. That is, the arrangement may be made such that the valve element 8 partially covers the entry of the emitting injection opening 17. In addition, in the above-described embodiment, the emitting injection opening 17 is provided as one of the injection openings of the second injection opening group 11. However, as long as emitting injection openings 17 are not all the injection openings of the second injection opening group 11, the number of the emitting injection openings 17 may be larger than one.

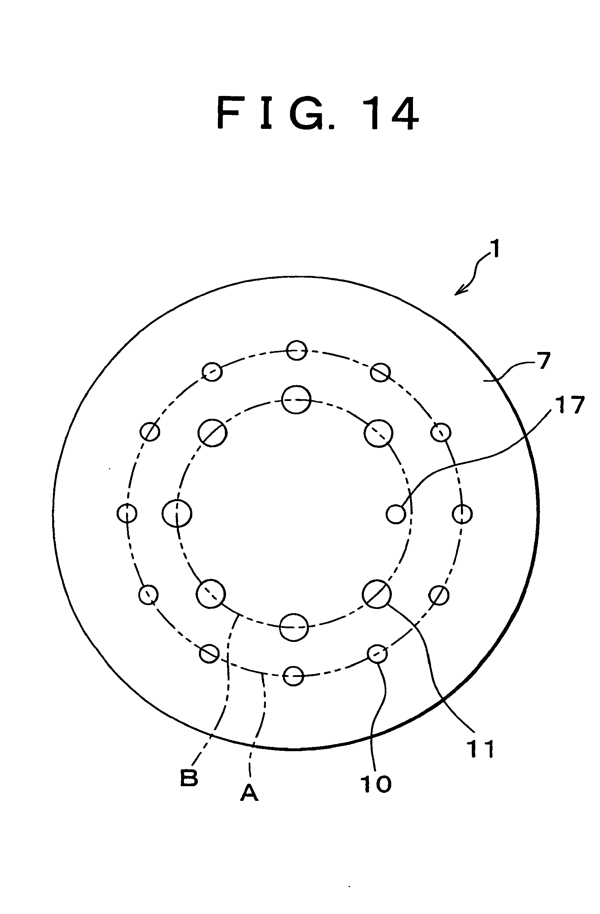

Hereinbelow, a modified example of the third embodiment of the invention will be described with reference to Fig. 14. As shown in Fig. 14, unlike the third embodiment, the diameter of the emitting injection opening 17 of the second injection opening group 11 is smaller than the diameter of each of the injection openings other than the emitting injection opening 17 of the second injection opening group 11 in the modified example. In addition, the injection openings of the second injection opening group 11 are not disposed at identical angular intervals around the longitudinal axis line 16 of the fuel injection valve 1. More specifically, the angular interval between the emitting injection opening 17 and the injection opening of the second injection opening group 11 that is adjacent to the emitting injection opening 17 is smaller than the angular interval between the injection openings other than the emitting injection opening 17 of the second injection opening group 11. However, the angular intervals between the injection openings other than the emitting injection opening 17 are equal.

In the modified example of the third embodiment of the embodiment, the emitting injection opening 17 of the second injection opening group 11 is formed to have a small diameter. Thus, when the lift amount has become zero, and fuel remaining in the sac portion 12 is emitted due to boiling under reduced pressure in the expansion stroke, the emission pressure and velocity of the emitting fuel can be increased. Accordingly, the fuel to be emitted into the combustion chamber is atomized. As such, the atomization of the fuel is performed by using the emitting injection opening 17 having a reduced diameter in addition to the atomization performed by emitting the fuel remaining in the sac portion 12 only from the emitting injection opening 17 by using boiling under reduced pressure in the expansion stroke when the lift amount of the valve element 8 has become zero. Thus, the degree of pollution of exhaust gas is reduced.

The diameter of the emitting injection opening 17 is smaller than the diameter of each of the injection openings other than the emitting injection opening 17 of the second injection opening group 11. Accordingly, at the time of full-open injection, the injection amount of fuel from the emitting injection opening 17 is smaller than the injection amount of fuel from each of the injection openings other than the emitting injection opening 17 of the second injection opening group 11. As described above, however, in the modified example, the angular interval between the emitting injection opening 17 and the injection opening of the second injection opening group 11 that is adjacent to the emitting injection opening 17 is smaller than the angular interval between the injection openings other than the emitting injection opening 17 of the second injection opening group 11. Consequently, at the time of full-open injection, amounts of fuel injected per unit volume become equal in all the injection directions, thereby optimizing the combustion in the combustion chamber. Thus, the output performance and the exhaust characteristics of the internal combustion engine can be made excellent.

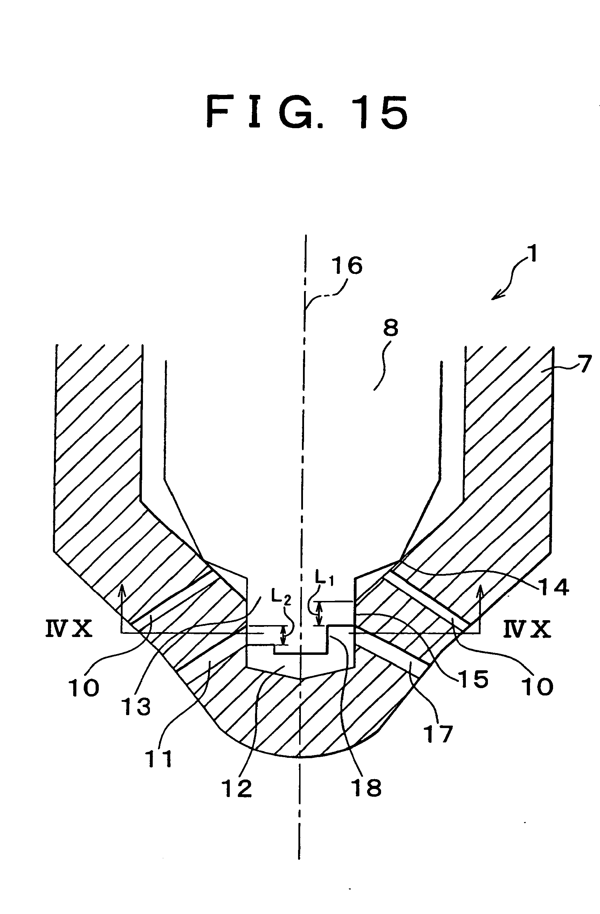

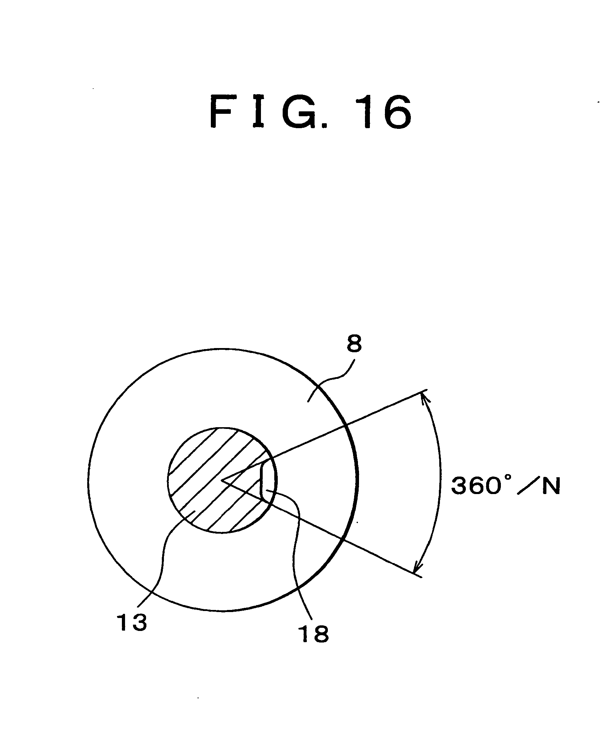

Next, referring to Figs. 15 to 18, a fourth embodiment of the present will be described. The fourth embodiment is different from the third embodiment in that all injection openings of the second injection opening group 11 are disposed at equal angular intervals around the longitudinal axis line 16 of the fuel injection valve 1. That is, the injection openings of the second injection opening group 11 are circumferentially disposed at equal intervals. In addition, the individual injection openings of the second injection opening group 11 are disposed to be identical in the relative positional relationship with respect to the longitudinal axis line of the fuel injection valve 1. As such, the angles of the individual injection openings extending with respect to the longitudinal axis line 16 are equal. Also, the diameters of the injection openings of the second injection opening group 11 are the same. Moreover, in the fourth embodiment, a cutout portion 18 (passage) is formed in the protruding end portion 13 of the valve element 8. The cutout portion 18 is formed to extend downstream from the end of the protruding end portion 13, and is positioned on a longitudinal outer peripheral surface of the protruding end portion 13. As shown in Fig. 16, when N represents the number of the injection openings of the second injection opening group 11, the cutout portion 18 circumferentially extends by a length corresponding to an angle of 360°/N, and the radial depth of the cutout portion 18 is at least smaller than the radius of the protruding end portion 13.

Next, the operation of the fuel injection valve of the fourth embodiment will be described. Suppose the valve element 8 is in a state as shown in Fig. 15. Specifically, suppose the valve element 8 is in a state where the portion between the nozzle body 7 and the valve element 8 is sealed by the seat portion 14, and the portion between the nozzle body 7 and the protruding end portion 13 of the valve element 8 is sealed by the sliding seal portion 15. In this case, as in the third embodiment, since the first and second injection opening groups 10 and 11 are closed by the valve element 8, no fuel is injected from the injection openings of the first and second injection opening groups 10 and 11.

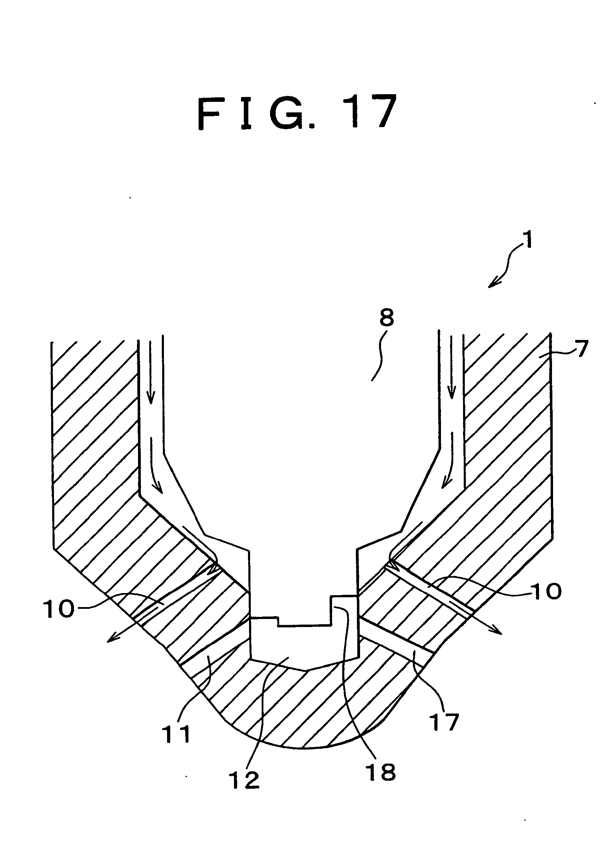

Fig. 17 shows a state where the valve element 8 is lifted according to the first lift amount. At this time, the valve element 8 remains sealed by the sliding seal portion 15 at a position upstream of the cutout portion 18 of the protruding end portion 13 of the second injection opening group 11. Accordingly, all the injection openings of the second injection opening group 11 are closed. At this time, as shown by arrows, the fuel flows from the upstream side to the vicinity of the end of the valve element 8 through the space formed between the nozzle body 7 and the valve element 8, and is then injected only from the injection openings of the first injection opening group 10.

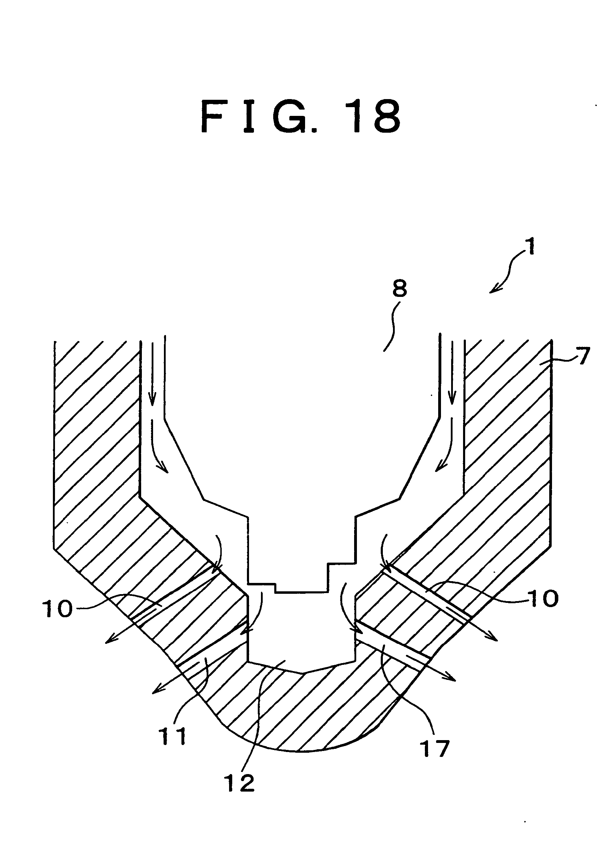

Fig. 18 shows a state where the valve element 8 is lifted according to the second lift amount. At this time, as shown by arrows, the fuel flows from the upstream side to the vicinity of the end of the valve element 8 through the space formed between the nozzle body 7 and the valve element 8, and is then injected only from the injection openings of the first and second injection opening groups 10 and 11.

The cutout portion 18 has a longitudinal length such that when the valve element 8 is moved downstream to perform the full-open injection, the fuel flowing into the sac portion 12 through the cutout portion 18 of the protruding end portion 13 is injected from all the injection openings of the second injection opening group 11 almost at the same time. Specifically, the cutout portion 18 is formed such that, in the case where the lift amount of the valve element 8 is set to the second lift amount, all the injection openings are opened when the cutout portion 18 of the protruding end portion 13 is disengaged from the sliding seal portion 15 to allow the pressurized fuel to flow into the sac portion 12. In other words, the length from a position of the protruding end portion 13, which is in contact with the sliding seal portion 15, to an upstream end of the cutout portion 18 is referred to as a smallest seal length L1 (cutout portion seal length) in the case where the lift amount of the valve element 8 is zero. Also, the distance from a position of the protruding end portion 13, which faces the entry opening of the injection opening of the second injection opening group 11 to the end of the protruding end portion 13 of the valve element 8 is referred to as an injection opening full-open lift length L2. In this case, the smallest seal length L1 is set to be larger than the injection opening full-open lift length L2.

Next, advantages of the fuel injection valve 1 according to the fourth embodiment of the invention will be described. As in the third embodiment, in the fuel injection valve 1 of the present embodiment, at the time of non-injection, that is, when the lift amount of the valve element 8 is zero, only the injection opening corresponding to the cutout portion 18 is opened to the sac portion 12. Accordingly, there is no case in which, when the lift amount of the valve element 8 is zero, the fuel is not emitted from the sac portion 12 and is therefore highly pressurized. In addition, when the lift amount of the valve element 8 has become zero, fuel remaining in the sac portion 12 is emitted only from the injection opening corresponding to the cutout portion 18 due to boiling under reduced pressure in the expansion stroke. Hence, the emission pressure and velocity of the emitting fuel can be increased. For this reason, the fuel to be emitted into the combustion chamber is atomized, and oxidation and combustion of the fuel is promoted by residual heat of exhaust gas. Consequently, HC in the exhaust gas is reduced, and the exhaust gas is purged. In addition, the amount of gaseous fuel generated by boiling under reduced pressure is increased according to a decrease in the number of the injection openings for emitting fuel remaining in the sac portion 12. Consequently, a reduction occurs in the amount of liquid fuel pushed into the combustion chamber by gaseous fuel. This also promotes oxidation and combustion of the fuel, thereby reducing the degree of pollution of exhaust gas. Moreover, although the advantages similar to those of the third embodiment can thus be obtained, high manufacturing precision is not required as compared with the third embodiment. Processing of the valve element as used in the fourth embodiment is easier than processing of the nozzle body as in the third embodiment. As such, the manufacture is facilitated, and the cost can be reduced.

The injection opening of the second injection opening group 11, which corresponds to the cutout portion 18, may be formed such that the flow coefficient is reduced. Alternatively, although the injection openings of the second injection opening group 11 are formed to have the same diameters, only the injection opening corresponding to the cutout portion 18 may be formed to have a reduced diameter. In this case, the arrangement may be made such that the angular interval between the injection opening corresponding to the cutout portion 18 and the injection opening of the second injection opening group 11 that is adjacent to the injection opening corresponding to the cutout portion 18 is smaller than the angular interval between the injection openings other than the injection opening of the second injection opening group 11, which corresponds to the cutout portion 18. The injection opening corresponding to the cutout portion 18 corresponds to the emitting injection opening 17 in the third embodiment.

The fuel injection valve of the invention is not limited to that including two injection opening groups. Also in a typical fuel injection valve, since injection openings communicate with a portion downstream of a seat portion in a fuel passage, a space with which the injection openings communicate inevitably exists although the volume thereof varies. When the intra-cylinder pressure at the second-half stage of the expansion stroke is reduced to be lower than the intra-cylinder pressure at the completion of fuel injection, the fuel in the space is brought to a boil under reduced pressure and flows out from the fuel injection valve. Therefore, the invention may be applied not only to a diesel engine, but also to, for example, an in-cylinder type spark ignition engine in which fuel is injected into the cylinder in the compression stroke for stratified charge combustion.

In the internal combustion engine in which fuel is injected into the cylinder in the compression stroke, the fuel is brought to a boil under reduced pressure and flows out from the injection openings communicating with the space downstream of the seat portion of the fuel injection valve in the second-half stage of the expansion stroke. In this case, for example, using a valve element having a devised end shape, injection openings for flowing out the fuel can be designated.

In each of the embodiments, the diesel engine has been described. However, the internal combustion engine of the invention may be used either in a case where fuel is injected into a combustion chamber of an internal combustion engine different from the diesel engine or in a case where fuel is injected into an engine intake passage connected to a combustion chamber.

As described above, the internal combustion engine of the invention is the internal combustion engine in which fuel is injected into the cylinder through the fuel injection valve in the compression stroke. In the internal combustion engine, a part of intra-cylinder burned gas containing fuel that has flowed out from the fuel injection valve in the expansion stroke is returned into the engine intake system. Thus, the part of the burned gas containing fuel that has flowed out from the fuel injection valve is fed from the engine intake system into the cylinder for use in combustion in the end stage of the compression stroke. As such, the part of the burned gas is not emitted as it is from the engine intake system into the atmosphere, and thus degradation in exhaust emission can be prevented.

In addition, since the fuel to be emitted from the sac portion at the time of non-injection is atomized, oxidation and combustion of the fuel is promoted by residual heat of exhaust gas. Consequently, HC in the exhaust gas is reduced, and the exhaust gas is purged. Specifically, fuel remaining in the volumetric space after fuel injection can be processed without causing deterioration in the operational performance of the internal combustion engine and degradation in emission of the exhaust gas.

Furthermore, since the passage is provided in the valve element, high precision is not required. Accordingly, the manufacture is facilitated.

In an internal combustion engine in which fuel is injected through a fuel injection valve (1) into a cylinder in a compression stroke, a part of intra-cylinder burned gas containing fuel that has flowed out from the fuel injection valve (1) in an expansion stroke is returned into an intake port (4).

## Claims

1. An internal combustion engine in which a sac portion (12) is formed in an end portion (9) of a fuel injection valve (1) for feeding fuel, **characterized in that** a part of burned gas containing fuel that has flowed out from the sac portion (12) into the cylinder during an expansion stroke is returned into an engine intake system.

2. The internal combustion engine according to claim 1, **characterized in that** the part of the burned gas is returned into an intake port (4) of a corresponding cylinder as the engine intake system.

3. The internal combustion engine according to claim 2, **characterized in that** the part of the burned gas is returned into the intake port (4) of the corresponding cylinder by differential pressure between a pressure of overall burned gas in the cylinder and a pressure in the intake port (4) of the corresponding cylinder.

4. The internal combustion engine according to claim 3, **characterized in that** an intake valve (2) is opened before an exhaust valve (3) is opened, whereby the part of the burned gas that is positioned in an upper portion of the cylinder is returned into the intake port (4) of the corresponding cylinder.

5. The internal combustion engine according to claim 3, **characterized in that** the part of the burned gas is returned into the intake port (4) of the corresponding cylinder through a communication passage (19a) which provides communication between an upper portion of the cylinder and the intake port (4) of the corresponding cylinder.

6. The internal combustion engine according to claim 1, **characterized in that** the part of the burned gas is returned into a surge tank (20) as the engine intake system.

7. The internal combustion engine according to claim 6, **characterized in that** the part of the burned gas is returned into the surge tank (20) by differential pressure between a pressure of overall burned gas in the cylinder and a pressure in the surge tank (20).

8. The internal combustion engine according to claim 7, **characterized in that** exhaust valves (3a,3b) and the fuel injection valve (1) are adjacently disposed, the part of the burned gas flows to an engine exhaust system earlier than the remaining burned gas by opening the exhaust valves (3a, 3b), and the part of the burned gas is returned into the surge tank (20) through a communication passage (24) which provides communication between the engine exhaust system and the surge tank (20).

9. The internal combustion engine according to claim 8,
**characterized in that**:
at least two exhaust valves (3a,3b) are provided;
a first exhaust valve (3b) is disposed to be adjacent to the fuel injection valve (1);
the engine exhaust system has a first exhaust passage (22) for communicating with the cylinder through the first exhaust valve (3b) and a second exhaust passage (23) for communicating with the cylinder through the other exhaust valve (3a) ; and
the communication passage (24) is connected to the first exhaust passage (22), and the part of the burned gas returned into the surge tank (20) through the communication passage (24) by opening the first exhaust valve (3b) earlier than the second exhaust valve (3a).

10. The internal combustion engine according to claim 9,
**characterized in that**:
the first exhaust passage (22) is common to a plurality of cylinders and communicates with each of the cylinders through the first exhaust valve (3b) for each of the cylinders; and
the second exhaust passage (23) is common to a plurality of cylinders and communicates with each of the cylinders through the second exhaust valve (3a) for each of the cylinders.

11. The internal combustion engine according to claim 10,
**characterized in that**:
the first exhaust passage (22) and the second exhaust passage (23) communicate with a single turbine (26) of a turbocharger; and
wastegate passages (28, 30) bypassing the turbine (26) are provided in the first exhaust passage (22) and the second exhaust passage (23), respectively, each of amount of burned gas passing through the wastegate passages (28, 30) is controlled, and amount of the burned gas flowing into the turbine (26) through the first exhaust passage (22) and the second exhaust passage (23) are made substantially equal.

12. The internal combustion engine according to any one of claims 1 to 11, **characterized in that**, when a reduction substance is required in the engine exhaust system, the return of the part of the burned gas into the engine intake system is prohibited.

13. The internal combustion engine according to claim 12, **characterized in that**, when the reduction substance is required in the engine exhaust system, an amount of new intake air is increased.

14. The internal combustion engine according to claim 1,
**characterized by** further comprises:
an injection opening group (11) including a plurality of injection openings for providing communication between the sac portion (12) and a combustion chamber, and an emitting injection opening (17) for emitting fuel from the sac portion (12) in the fuel injection valve (1); in that
at a time of fuel injection, the injection opening group (11) and the emitting injection opening (17) are opened simultaneously, and fuel in the sac portion (12) is injected from the injection opening group (11) and the emitting injection opening (17) simultaneously; and
at a time of non-injection, the emitting injection opening (17) opens to allow to communicate between the sac portion (12) and the combustion chamber, and the injection opening group (11) is closed.

15. The internal combustion engine according to claim 14,
**characterized by** further comprising:
an additional injection opening group (10) including a plurality of injection openings in the fuel injection valve (1); in that
the fuel injection includes two states composed of:
a first state in which the injection opening group (11), the emitting injection opening (17), and the additional injection opening group (10) are opened, and the fuel is injected from the injection opening group (11), the emitting injection opening (17), and the additional injection opening group (10); and
a second state in which only the additional injection opening group (10) is opened, and the fuel is injected only from the additional injection opening group (10).

16. The internal combustion engine according to claim 14 or 15, **characterized in that** a position of a sac portion side opening of the emitting injection opening (17) is lower than a position of a sac portion side opening of the injection opening group (11).

17. The internal combustion engine according to claim 16, **characterized in that**, when the fuel is injected from the injection opening group (11),
a target destination point of the fuel injected from the injection opening group (11) exists on a circle whose center is a longitudinal axis line of the fuel injection valve (1); and
an injection angle of the emitting injection opening (17) is set so that the fuel injected from the emitting injection opening (17) also reaches the target destination point that exists on the circle.

18. The internal combustion engine according to claim 14 or 15,
**characterized in that**:
a valve element (8) is provided which closes the additional injection opening group (10) and the injection opening group (11) at the time of non-injection, and which opens the additional injection opening group (10) and the injection opening group (11) at the time of fuel injection; and
the valve element (8) is configured to have a passage (18) such that only the emitting injection opening (17) is opened to the sac portion (12) at the time of non-injection.

19. The internal combustion engine according to any one of claims 14 to 18, **characterized by** further comprising emission pressure increasing means for increasing an emission pressure of the fuel emitted from the emitting injection opening (17) at the time of non-injection.

20. The internal combustion engine according to claim 19, **characterized in that**, as the emission pressure increasing means, a diameter of the emitting injection opening (17) is set to be smaller than a diameter of each of the injection openings of the injection opening group (11).

21. The internal combustion engine according to claim 19, **characterized in that**, as the emission pressure increasing means, a flow rate coefficient of the emitting injection opening (17) is set to be lower than a flow rate coefficient of the injection opening group (11).

22. The internal combustion engine according to any one of claims 14 to 21, **characterized in that** an injection direction of the emitting injection opening (17) is set such that the fuel is injected from the emitting injection opening (17) toward a region where the probability of deterioration due to heat is low among regions on an upper wall surface of a piston at the time of non-injection.

23. The internal combustion engine according to any one of claims 15 to 22, **characterized in that**:
the fuel injection valve (1) further comprises a generally columnar nozzle body (7);
a fuel passage (1a) comprising a generally cylindrical large diameter portion (1b), a tapered portion (1c) whose diameter is continually reduced from the large diameter portion (1b) to an end portion, and a generally cylindrical small diameter portion (1d) that continues from the tapered portion (1c) to an end side is formed in the nozzle body 7;
the valve element (8) comprising a seat portion (14) contacting the tapered portion (1c) and a protruding end portion (13) corresponding to the diameter of the small diameter portion (1d) is disposed in the nozzle body 7 so as to be reciprocatively movable;
the sac portion (12) as a volumetric space that is partitioned at a time of closing operation by the valve element (8) is formed in an end portion of the fuel injection valve (1);
an additional injection opening group (10) comprising the plurality of injection openings providing communication between the tapered portion (1c) downstream of the seat portion (14) and an outer surface of the end portion of the fuel injection valve (1), an injection opening group (11) that provides communication between the outer surface of the end portion of the fuel injection valve (1) and the small diameter portion (1d) and that is closed by the protruding end portion (13) at the time of closing operation of the valve element (8), and the emitting injection opening (17) communicating with the sac portion (12) at the time of closing operation of the valve element (8) are formed in the end portion of the fuel injection valve (1);
at the time of the opening operation of the valve element (8), the sheet portion (14) contacts the tapered portion (1c) and the protruding end portion (13) is inserted into the small diameter portion (1d), thereby closing the additional injection opening group (10), the injection opening group (11), and the emitting injection opening (17);
at a time of a first state opening operation of the valve element (8), while the seat portion (14) moves away from the tapered portion (1c), the protruding end portion (13) remains inserted into the small diameter portion (1d), whereby only the additional injection opening group (10) communicates with the fuel passage (1a); and
at a time of a second state opening operation of the valve element (8), the seat portion (14) moves away from the tapered portion (1c) and the protruding end portion (13) also moves out of the small diameter portion (1d), whereby the additional injection opening group (10), the injection opening group (11), and the emitting injection opening (17) communicates with the fuel passage (1a)

## Patentansprüche

1. Brennkraftmaschine, bei der ein Hohlraumabschnitt (12) in einem Endabschnitt (9) eines Kraftstoffeinspritzventils (1) zur Zuführung von Kraftstoff ausgebildet ist, **dadurch gekennzeichnet, dass** ein Teil des verbrannten Gases, der Kraftstoff enthält, der aus dem Hohlraumabschnitt (12) während eines Expansionshubes in den Zylinder geströmt ist, in ein Einlasssystem der Brennkraftmaschine zurückgeführt wird.

2. Brennkraftmaschine nach Anspruch 1, **dadurch gekennzeichnet, dass** der Teil des verbrannten Gases in eine Einlassöffnung (4) eines entsprechenden Zylinders als Einlasssystem der Brennkraftmaschine zurückgeführt wird.

3. Brennkraftmaschine nach Anspruch 2, **dadurch gekennzeichnet, dass** der Teil des verbrannten Gases durch die Druckdifferenz zwischen dem Druck des gesamten verbrannten Gases im Zylinder und dem Druck in der Einlassöffnung (4) des entsprechenden Zylinders in die Einlassöffnung (4) des entsprechenden Zylinders zurückgeführt wird.

4. Brennkraftmaschine nach Anspruch 3, **dadurch gekennzeichnet, dass** ein Einlassventil (2) vor einem Auslassventil (3) geöffnet wird, wodurch der Teil des verbrannten Gases, der sich in einem oberen Abschnitt des Zylinders befindet, in die Einlassöffnung (4) des entsprechenden Zylinders zurückgeführt wird.

5. Brennkraftmaschine nach Anspruch 3, **dadurch gekennzeichnet, dass** der Teil des verbrannten Gases in die Einlassöffnung (4) des entsprechenden Zylinders durch einen Verbindungskanal (19a) zurückgeführt wird, der für eine Verbindung zwischen einem oberen Abschnitt des Zylinders und der Einlassöffnung (4) des entsprechenden Zylinders sorgt.

6. Brennkraftmaschine nach Anspruch 1, **dadurch gekennzeichnet, dass** der Teil des verbrannten Gases in einen Druckausgleichsbehälter (20) als Einlasssystem der Brennkraftmaschine zurückgeführt wird.

7. Brennkraftmaschine nach Anspruch 6, **dadurch gekennzeichnet, dass** der Teil des verbrannten Gases durch die Druckdifferenz zwischen dem Druck des gesamten verbrannten Gases im Zylinder und dem Druck im Druckausgleichsbehälter (20) in den Druckausgleichsbehälter (20) zurückgeführt wird.

8. Brennkraftmaschine nach Anspruch 7, **dadurch gekennzeichnet, dass** Auslassventile (3a, 3b) und das Kraftstoffeinspritzventil (1) benachbart zueinander angeordnet sind, der Teil des verbrannten Gases durch Öffnen der Auslassventile (3a, 3b) früher in ein Auslasssystem der Brennkraftmaschine als das verbleibende verbrannte Gas strömt und dass der Teil des verbrannten Gases durch einen Verbindungskanal (24), der für eine Verbindung zwischen dem Auslasssystem der Brennkraftmaschine und dem Druckausgleichsbehälter (22) sorgt, in den Druckausgleichsbehälter (20) zurückgeführt wird.

9. Brennkraftmaschine nach Anspruch 8, **dadurch gekennzeichnet, dass**
mindestens zwei Auslassventile (3a, 3b) vorgesehen sind;
ein erstes Auslassventil (3b) benachbart zum Kraftstoffeinspritzventil (1) angeordnet ist;
das Auslasssystem der Brennkraftmaschine einen ersten Auslasskanal (22), der mit dem Zylinder über das erste Auslassventil (3b) in Verbindung steht, und einen zweiten Auslasskanal (23), der mit dem Zylinder durch das andere Auslassventil (3a) in Verbindung steht, aufweist; und
der Verbindungskanal (24) mit dem ersten Auslasskanal (22) und dem Teil des verbrannten Gases, der durch den Verbindungskanal (24) in den Druckausgleichsbehälter (20) zurückgeführt wird, durch das frühere Öffnen des ersten Auslassventils (3b) als des zweiten Auslassventils (3a) in Verbindung steht.

10. Brennkraftmaschine nach Anspruch 9, **dadurch gekennzeichnet, dass**
der erste Auslasskanal (22) zu einer Vielzahl von Zylindern gehört und mit jedem der Zylinder über das erste Auslassventil (3b) für jeden Zylinder in Verbindung steht; und
der zweite Auslasskanal (23) zu einer Vielzahl von Zylindern gehört und mit jedem der Zylinder über das zweite Auslassventil (3a) für jeden Zylinder in Verbindung steht.

11. Brennkraftmaschine nach Anspruch 10, **dadurch gekennzeichnet, dass**
der erste Auslasskanal (22) und der zweite Auslasskanal (23) mit einer einzigen Turbine (26) eines Turboladers in Verbindung stehen; und
Abgaskanäle (28, 30), die die Turbine (26) umgehen, im ersten Auslasskanal (22) und zweiten Auslasskanal (23) vorgesehen sind, jede Menge an verbranntem Gas, die die Abgaskanäle (28, 30) passiert, gesteuert wird und die Mengen des verbrannten Gases, die in die Turbine (26) durch den ersten Auslasskanal (22) und zweiten Auslasskanal (23) strömen, im Wesentlichen gleichgemacht sind.

12. Brennkraftmaschine nach einem der Ansprüche 1-11, **dadurch gekennzeichnet, dass** dann, wenn eine Reduktionssubstanz im Auslasssystem der Brennkraftmaschine erforderlich ist, die Rückführung des Teiles des verbrannten Gases in das Einlasssystem der Brennkraftmaschine verboten wird.

13. Brennkraftmaschine nach Anspruch 12, **dadurch gekennzeichnet, dass** dann, wenn die Reduktionssubstanz im Auslasssystem der Brennkraftmaschine erforderlich ist, die Menge an neuer Einlassluft erhöht wird.

14. Brennkraftmaschine nach Anspruch 1, **dadurch gekennzeichnet, dass** sie des Weiteren umfasst:
eine Einspritzöffnungsgruppe (11) mit einer Vielzahl von Einspritzöffnungen zur Herstellung einer Verbindung zwischen dem Hohlraumabschnitt (12) und einer Verbrennungskammer und eine Emissionseinspritzöffnung (17) zum Emittieren von Kraftstoff aus dem Hohlraumabschnitt (12) in das Kraftstoffeinspritzventil (1), wobei
zum Zeitpunkt der Kraftstoffeinspritzung die Einspritzöffnungsgruppe (11) und die Emissionseinspritzöffnung (17) gleichzeitig geöffnet werden und Kraftstoff im Hohlraumabschnitt (12) von der Einspritzöffnungsgruppe (11) und der Emissionseinspritzöffnung (17) gleichzeitig eingespritzt wird und
zum Zeitpunkt einer Nichteinspritzung sich die Emissionseinspritzöffnung (17) öffnet, um eine Verbindung zwischen dem Hohlraumabschnitt (12) und der Verbrennungskammer herzustellen, und die Einspritzöffnungsgruppe (11) geschlossen wird.

15. Brennkraftmaschine nach Anspruch 14, **dadurch gekennzeichnet, dass** sie des Weiteren umfasst:
eine zusätzliche Einspritzöffnungsgruppe (10), die eine Vielzahl von Einspritzöffnungen im Kraftstoffeinspritzventil (1) aufweist, wobei
die Kraftstoffeinspritzung zwei Zustände umfasst, die bestehen aus:
einem ersten Zustand, in dem die Einspritzöffnungsgruppe (11), die Emissionseinspritzöffnung (17) und die zusätzliche Einspritzöffnungsgruppe (10) geöffnet sind und der Kraftstoff aus der Einspritzöffnungsgruppe (11), der Emissionseinspritzöffnung (17) und der zusätzlichen Einspritzöffnungsgruppe (10) eingespritzt wird, und
einem zweiten Zustand, in dem nur die zusätzliche Einspritzöffnungsgruppe (10) geöffnet ist und der Kraftstoff nur von der zusätzlichen Einspritzöffnungsgruppe (10) eingespritzt wird.

16. Brennkraftmaschine nach Anspruch 14 oder 15, **dadurch gekennzeichnet, dass** die Position einer Hohlraumabschnittsseitenöffnung der Emissionseinspritzöffnung (17) niedriger angeordnet ist als die Position einer Hohlraumabschnittsseitenöffnung der Einspritzöffnungsgruppe (11).

17. Brennkraftmaschine nach Anspruch 16, **dadurch gekennzeichnet, dass** dann, wenn der Kraftstoff von der Einspritzöffnungsgruppe (11) eingespritzt wird,
ein Sollzielpunkt des von der Einspritzöffnungsgruppe (11) eingespritzten Kraftstoffs auf einem Kreis vorhanden ist, dessen Mittelpunkt sich auf einer Längsachse des Kraftstoffventils (1) befindet, und
der Einspritzwinkel der Emissionseinspritzöffnung (17) so eingestellt ist, dass der von der Emissionseinspritzöffnung (17) eingespritzte Kraftstoff auch den Sollzielpunkt, der auf dem Kreis vorhanden ist, erreicht.

18. Brennkraftmaschine nach Anspruch 14 oder 15, **dadurch gekennzeichnet, dass**
ein Ventilelement (8) vorgesehen ist, dass die zusätzliche Einspritzöffnungsgruppe (10) und die Einspritzöffnungsgruppe (11) zum Zeitpunkt der Nichteinspritzung schließt und die zusätzliche Einspritzöffnungsgruppe (10) und die Einspritzöffnungsgruppe (11) zum Zeitpunkt der Kraftstoffeinspritzung öffnet, und
das Ventilelement (8) so ausgebildet ist, dass es einen Kanal (18) aufweist, so dass nur die Emissionseinspritzöffnung (17) zum Zeitpunkt der Nichteinspritzung zum Hohlraumabschnitt (12) geöffnet wird.

19. Brennkraftmaschine nach einem der Ansprüche 14-18, **dadurch gekennzeichnet, dass** sie des Weiteren eine Emissionsdruckerhöhungseinrichtung zum Erhöhen des Emissionsdrucks des von der Emissionseinspritzöffnung (17) zum Zeitpunkt der Nichteinspritzung emittierten Kraftstoffs aufweist.

20. Brennkraftmaschine nach Anspruch 19, **dadurch gekennzeichnet, dass** als Emissionsdruckerhöhungseinrichtung der Durchmesser der Emissionseinspritzöffnung (17) so eingestellt ist, dass er geringer ist als der Durchmesser einer jeden Einspritzöffnung der Einspritzöffnungsgruppe (11).

21. Brennkraftmaschine nach Anspruch 19, **dadurch gekennzeichnet, dass** als Emissionsdruckerhöhungseinrichtung der Durchsatzkoeffizient der Emissionseinspritzöffnung (17) geringer eingestellt ist als der Durchsatzkoeffizient der Einspritzöffnungsgruppe (11).

22. Brennkraftmaschine nach einem der Ansprüche 14-21, **dadurch gekennzeichnet, dass** die Einspritzrichtung der Emissionseinspritzöffnung (17) so eingestellt ist, dass der Kraftstoff von der Emissionseinspritzöffnung (17) in Richtung auf einen Bereich eingespritzt wird, in dem die Wahrscheinlichkeit einer Qualitätsverschlechterung aufgrund von Wärme unter den Bereichen auf einer oberen Wandfläche eines Kolbens zum Zeitpunkt der Nichteinspritzung gering ist.

23. Brennkraftmaschine nach einem der Ansprüche 22, **dadurch gekennzeichnet, dass**
das Kraftstoffeinspritzventil (1) des Weiteren einen generell säulenförmigen Düsenkörper (7) aufweist;
im Düsenkörper (7) ein Kraftstoffkanal (1a) ausgebildet ist, der einen generell zylindrischen Abschnitt (1b) mit großem Durchmesser, einen sich verjüngenden Abschnitt (1c), dessen Durchmesser vom Abschnitt (1b) mit großem Durchmesser kontinuierlich bis zu einem Endabschnitt abnimmt, und einen generell zylindrischen Abschnitt (1d) mit kleinem Durchmesser, der sich vom sich verjüngenden Abschnitt (1c) bis zu einer Endseite fortsetzt, umfasst;
das Ventilelement (8), das einen Sitzabschnitt (14), der den sich verjüngenden Abschnitt (1c) kontaktiert, und einen vorstehenden Endabschnitt (13) aufweist, der dem Durchmesser des Abschnittes (1d) mit kleinem Durchmesser entspricht, so im Düsenkörper (7) angeordnet ist, dass es hin- und herbewegbar ist;
der Hohlraumabschnitt (12) als volumetrischer Raum, der zum Zeitpunkt des Schließvorganges durch das Ventilelement (8) unterteilt wird, in einem Endabschnitt des Kraftstoffeinspritzventils (1) ausgebildet ist;
eine zusätzliche Einspritzöffnungsgruppe (10), die die Vielzahl der Einspritzöffnungen umfasst, welche die Verbindung zwischen dem sich verjüngenden Abschnitt (1c) abstromseitig des Sitzabschnittes (14) und einer Außenfläche des Endabschnittes des Kraftstoffeinspritzventils (1) herstellen, eine Einspritzöffnungsgruppe (11), die die Verbindung zwischen der Außenfläche des Endabschnittes des Kraftstoffeinspritzventils (1) und dem Abschnitt (1d) mit kleinem Durchmesser herstellt und vom vorstehenden Endabschnitt (13) zum Zeitpunkt des Schließvorganges des Ventilelementes (8) geschlossen wird, und die Emissionseinspritzöffnung (17), die mit dem Hohlraumabschnitt (12) zum Zeitpunkt des Schließvorganges des Ventilelementes (8) kommuniziert, im Endabschnitt des Kraftstoffeinspritzventils (1) ausgebildet sind;
zum Zeitpunkt des Öffnungsvorganges des Ventilelementes (8) der Sitzabschnitt (14) den sich verjüngenden Abschnitt (1c) kontaktiert und der vorstehende Endabschnitt (13) in den Abschnitt (1d) mit kleinem Durchmesser eingesetzt ist, so dass auf diese Weise die zusätzliche Einspritzöffnungsgruppe (10), die Einspritzöffnungsgruppe (11) und die Emissionseinspritzöffnung (17) geschlossen werden;
zum Zeitpunkt eines Öffnungsvorganges in einem ersten Zustand des Ventilelementes (8), in dem sich der Sitzabschnitt (14) vom sich verjüngenden Abschnitt (1c) weg bewegt, der vorstehende Endabschnitt (13) in den Abschnitt (1d) mit kleinem Durchmesser eingesetzt bleibt, wodurch nur die zusätzliche Einspritzöffnungsgruppe (10) mit dem Kraftstoffkanal (1a) in Verbindung steht; und
zum Zeitpunkt eines Öffnungsvorganges in einem zweiten Zustand des Ventilelementes (8) sich der Sitzabschnitt (14) vom sich verjüngenden Abschnitt (1c) wegbewegt und sich auch der vorstehende Endabschnitt (13) vom Abschnitt (1d) mit kleinem Durchmesser wegbewegt, wodurch die zusätzliche Einspritzöffnungsgruppe (10), die Einspritzöffnungsgruppe (11) und die Emissionseinspritzöffnung (17) mit dem Kraftstoffkanal (1a) in Verbindung stehen.

## Revendications

1. Moteur à combustion interne dans lequel une partie de sac (12) est formée dans une partie d'extrémité (9) d'une soupape d'injection de carburant (1) pour alimenter le carburant, **caractérisé en ce qu'**une partie du gaz brûlé contenant du carburant qui s'est écoulée de la partie de sac (12) pour pénétrer dans le cylindre au cours de la course de détente est renvoyée dans un système d'admission du moteur.

2. Moteur à combustion interne selon la revendication 1, **caractérisé en ce que** la partie du gaz brûlé est renvoyée dans un orifice d'admission (4) d'un cylindre correspondant comme étant le système d'admission du moteur.

3. Moteur à combustion interne selon la revendication 2, **caractérisé en ce que** la partie du gaz brûlé est renvoyée dans l'orifice d'admission (4) du cylindre correspondant par la pression différentielle entre une pression du gaz brûlé global dans le cylindre et une pression dans l'orifice d'admission (4) du cylindre correspondant.

4. Moteur à combustion interne selon la revendication 3, **caractérisé en ce qu'**une soupape d'admission (2) s'ouvre avant que ne s'ouvre une soupape d'échappement (3) et, de ce fait, la partie du gaz brûlé qui est située dans une partie supérieure du cylindre est renvoyée dans l'orifice d'admission (4) du cylindre correspondant.

5. Moteur à combustion interne selon la revendication 3, **caractérisé en ce que** la partie du gaz brûlé est renvoyée dans l'orifice d'admission (4) du cylindre correspondant par un passage de communication (19a) qui assure une communication entre une partie supérieure du cylindre et l'orifice d'admission (4) du cylindre correspondant.

6. Moteur à combustion interne selon la revendication 1, **caractérisé en ce que** la partie du gaz brûlé est renvoyée dans un réservoir d'expansion (20) comme étant le système d'admission de moteur.

7. Moteur à combustion interne selon la revendication 6, **caractérisé en ce que** la partie du gaz brûlé est renvoyée dans le réservoir d'expansion (20) par la pression différentielle entre une pression du gaz brûlé global dans le cylindre et une pression dans le réservoir d'expansion (20).

8. Moteur à combustion interne selon la revendication 7, **caractérisé en ce que** des soupapes d'échappement (3a, 3b) et la soupape d'injection de carburant (1) sont contiguës, la partie du gaz brûlé s'écoule par l'ouverture des soupapes d'échappement (3a, 3b)vers un système d'échappement du moteur à combustion plus tôt que le gaz brûlé restant, et la partie du gaz brûlé est renvoyée dans le réservoir d'expansion (20) par un passage de communication (24) qui assure une communication entre le système d'échappement du moteur à combustion et le réservoir d'expansion (20).

9. Moteur à combustion interne selon la revendication 8,
**caractérisé en ce que**:
au moins deux soupapes d'échappement (3a, 3b) sont installées ;
une première soupape d'échappement (3b) est placée contiguë à la soupape d'injection de carburant (1) ;
le système d'échappement du moteur à combustion comporte un premier passage d'échappement (22) pour communiquer avec le cylindre par le biais de la première soupape d'échappement (3b) et un second passage d'échappement (23) pour communiquer avec le cylindre par le biais de l'autre soupape d'échappement (3a) ; et
le passage de communication (24) est relié au premier passage d'échappement (22), et la partie du gaz brûlé est renvoyée dans le réservoir d'expansion (20) par le passage de communication (24) en ouvrant la première soupape d'échappement (3b) plus tôt que la seconde soupape d'échappement (3a).

10. Moteur à combustion interne selon la revendication 9,
**caractérisé en ce que**:
le premier passage d'échappement (22) est commun à une pluralité de cylindres et communique avec chacun des cylindres par le biais de la première soupape d'échappement (3b) pour chacun des cylindres ; et
le second passage d'échappement (23) est commun à une pluralité de cylindres et communique avec chacun des cylindres par le biais de la seconde soupape d'échappement (3a) pour chacun des cylindres ;

11. Moteur à combustion interne selon la revendication 10,
**caractérisé en ce que** :
le premier passage d'échappement (22) et le second passage d'échappement (23) communiquent avec une seule turbine (26) d'un turbocompresseur ; et
des passages de décharge (28, 30) contournant la turbine (26) sont fournis respectivement dans le premier passage d'échappement (22) et dans le second passage d'échappement (23), chaque quantité de gaz brûlé passant par les passages de détente (28, 30) est contrôlée, et les quantités du gaz brûlé pénétrant dans la turbine (26) par le premier passage d'échappement (22) et le second passage d'échappement (23) sont rendues sensiblement égales.

12. Moteur à combustion interne selon l'une quelconque des revendications 1 à 11, **caractérisé en ce que**, lorsqu'une substance de réduction est requise dans le système d'échappement du moteur à combustion, le retour de la partie du gaz brûlé vers le système d'admission du moteur est empêché.

13. Moteur à combustion interne selon la revendication 12, **caractérisé en ce que**, lorsque la substance de réduction est requise dans le système d'échappement du moteur à combustion, une quantité d'air d'admission neuf est augmentée.

14. Moteur à combustion interne selon la revendication 1, **caractérisé en ce qu'**il comprend en outre :
un groupe d'ouvertures d'injection (11) comportant une pluralité d'ouvertures d'injection pour assurer une communication entre la partie de sac (12) et une chambre de combustion, et une ouverture d'injection d'émission (17) pour émettre du carburant provenant de la partie de sac (12) dans la soupape d'injection de carburant (1) ; **en ce que**
au moment de l'injection de carburant, le groupe d'ouvertures d'injection (11) et l'ouverture d'injection d'émission (17) s'ouvrent simultanément, et le carburant dans la partie de sac (12) est injecté simultanément du groupe d'ouvertures d'injection (11) et de l'ouverture d'injection d'émission (17) ; et
au moment de la non-injection, l'ouverture d'injection d'émission (17) s'ouvre pour permettre la communication entre la partie de sac (12) et la chambre de combustion, et le groupe d'ouvertures d'injection (11) est fermé.

15. Moteur à combustion interne selon la revendication 14, **caractérisé en ce qu'**il comprend en outre :
une groupe supplémentaire d'ouvertures d'injection (10) comportant une pluralité d'ouvertures d'injection dans la soupape d'injection de carburant (1 ; **en ce que**
l'injection de carburant comporte deux états qui sont :
un premier état dans lequel le groupe d'ouvertures d'injection (11), l'ouverture d'injection d'émission (17), et le groupe supplémentaire d'ouvertures d'injection (10) sont ouverts, et le carburant est injecté par le groupe d'ouvertures d'injection (11), l'ouverture d'injection d'émission (17), et le groupe supplémentaire d'ouvertures d'injection (10) ; et
un second état dans lequel seul le groupe supplémentaire d'ouvertures d'injection (10) est ouvert, et le carburant est injecté seulement par le groupe supplémentaire d'ouvertures d'injection (10).

16. Moteur à combustion interne selon la revendication 14 ou 15, **caractérisé en ce qu'**un emplacement d'une ouverture côté partie de sac de l'ouverture d'injection d'émission (17) est plus bas qu'un emplacement d'une ouverture côté partie de sac du groupe d'ouvertures d'injection (11).

17. Moteur à combustion interne selon la revendication 16, **caractérisé en ce que**, lorsque le carburant est injecté du groupe d'ouvertures d'injection (11),
un point de destination cible du carburant injecté par le groupe d'ouvertures d'injection (11) se trouve sur un cercle dont le centre est situé sur un axe longitudinal de la soupape d'injection de carburant (1) ; et
un angle d'injection de l'ouverture d'injection d'émission (17) est réglé de manière à ce que le carburant injecté par l'ouverture d'injection d'émission (17) atteigne également le point de destination cible qui se trouve sur le cercle.

18. Moteur à combustion interne selon la revendication 14 or 15, **caractérisé en ce que** :
un élément de soupape (8) est fourni et ferme le groupe supplémentaire d'ouvertures d'injection (10) et le groupe d'ouvertures d'injection (11) au moment de la non-injection, et ouvre le groupe supplémentaire d'ouvertures d'injection (10) et le groupe d'ouvertures d'injection (11) au moment de l'injection de carburant ; et
l'élément de soupape (8) est configuré pour comporter un passage (18) faisant que seule l'ouverture d'injection d'émission (17) s'ouvre sur la partie de sac (12) au moment de la non-injection.

19. Moteur à combustion interne selon l'une quelconque des revendications 14 à 18, **caractérisé en ce qu'**il comprend en outre un moyen d'augmentation de la pression d'émission pour augmenter une pression d'émission du carburant émis par l'ouverture d'injection d'émission (17) au moment de la non-injection.

20. Moteur à combustion interne selon la revendication 19, **caractérisé en ce que**, comme le moyen d'augmentation de la pression d'émission, un diamètre de l'ouverture d'injection d'émission (17) est réglé pour être inférieur à un diamètre de chacune des ouvertures d'injection du groupe d'ouvertures d'injection (11).

21. Moteur à combustion interne selon la revendication 19, **caractérisé en ce que**, comme le moyen d'augmentation de la pression d'émission, un coefficient de débit de l'ouverture d'injection d'émission (17) est réglé pour être inférieur à un coefficient de débit du groupe d'ouvertures d'injection (11).

22. Moteur à combustion interne selon l'une quelconque des revendications 14 à 21, **caractérisé en ce qu'**une direction d'injection de l'ouverture d'injection d'émission (17) est réglée de manière à ce que le carburant soit injecté de l'ouverture d'injection d'émission (17) vers une région où la probabilité de détérioration en raison de la chaleur est faible parmi des régions situées sur une surface de paroi supérieure d'un piston au moment de la non-injection.

23. Moteur à combustion interne selon l'une quelconque des revendications 15 à 22, **caractérisé en ce que**:
la soupape d'injection de carburant (1) comprend en outre un corps de buse généralement en forme de colonne (7) ;
un passage de carburant (1a) comprenant une partie généralement cylindrique de grand diamètre (1b), une partie tronconique (1c) dont le diamètre diminue en continu depuis la partie de grand diamètre (1b) jusqu'à une partie d'extrémité, et une partie généralement cylindrique de petit diamètre (1d) qui se prolonge depuis la partie tronconique (1c) jusqu'à un côté d'extrémité est formé dans le corps de buse 7 ;
l'élément de soupape (8) comprenant une partie de siège (14) en contact avec la partie tronconique (1c) et une partie d'extrémité saillante (13) correspondant au diamètre de la partie de petit diamètre (1d) est placé dans le corps de buse 7 de manière à être mobile selon un mouvement alternatif ;
la partie de sac (12) comme espace volumétrique qui est divisé au moment de l'opération de fermeture par l'élément de soupape (8) est formée dans une partie d'extrémité de la soupape d'injection de carburant (1) ;
un groupe supplémentaire d'ouvertures d'injection (10) comprenant la pluralité d'ouvertures d'injection assurant une communication entre la partie tronconique (1c) à l'aval de la partie de siège (14) et une surface extérieure de la partie d'extrémité de la soupape d'injection de carburant (1), un groupe d'ouvertures d'injection (11) qui assure une communication entre la surface extérieure de la partie d'extrémité de la soupape d'injection de carburant (1) et la partie de petit diamètre (1d) et qui est fermé par la partie d'extrémité saillante (13) au moment de l'opération de fermeture de l'élément de soupape (8), et l'ouverture d'injection d'émission (17) communiquant avec la partie de sac (12) au moment de l'opération de fermeture de l'élément de soupape (8) sont formés dans la partie d'extrémité de la soupape d'injection de carburant (1) ;
au moment de l'opération d'ouverture de l'élément de soupape (8), la partie de siège (14) entre au contact de la partie tronconique (1c), et la partie d'extrémité saillante (13) est insérée dans la partie de petit diamètre (1d), fermant ainsi le groupe supplémentaire d'ouvertures d'injection (10), le groupe d'ouvertures d'injection (11), et l'ouverture d'injection d'émission (17) ;
au moment d'une opération d'ouverture de premier état de l'élément de soupape (8), alors que la partie de siège (14) s'éloigne de la partie tronconique (1c), la partie d'extrémité saillante (13) reste insérée dans la partie de petit diamètre (1d) et, de ce fait, seul le groupe supplémentaire d'ouvertures d'injection (10) communique avec le passage de carburant (1a); et
au moment de l'opération d'ouverture de second état de l'élément de soupape (8), la partie de siège (14) s'éloigne de la partie tronconique (1c) et la partie d'extrémité saillante (13) sort également de la partie de petit diamètre (1d), et de ce fait le groupe supplémentaire d'ouvertures d'injection (10), le groupe d'ouvertures d'injection (11), et l'ouverture d'injection d'émission (17) communiquent avec le passage de carburant (1a).
